# EUROPÄISCHE PATENTSCHRIFT

(11) **EP 3 578 863 B1**
(45) Veröffentlichungstag und Bekanntmachung des Hinweises auf die Patenterteilung: **31.08.2022**
(21) Anmeldenummer: 19178662.3
(22) Anmeldetag: 06.06.2019
(51) Int. Cl.: F16L 37/098

(54) **FLUIDVERBINDUNGSELEMENT**
FLUID CONNECTION ELEMENT
ÉLÉMENT DE LIAISON FLUIDIQUE

(30) Priorität: 08.06.2018 DE 102018113690
(43) Veröffentlichungstag der Anmeldung: 11.12.2019
(73) Patentinhaber: VERITAS AG, 63571 Gelnhausen (DE)
(72) Erfinder: RÖSCH, Thomas, 63589 Linsengericht (DE); SCHNEIDER, Jan-Phillip, 63579 Freigericht (DE)
(74) Vertreter: Patentship Patentanwaltsgesellschaft mbH

(56) Entgegenhaltungen:
- DE-A1-102004 053 539
- DE-A1-102012 106 925
- US-A1- 2014 284 915
- US-B1- 7 543 858

## Beschreibung

Die vorliegende Erfindung betrifft ein Fluidverbindungselement zum Herstellen einer Fluidverbindung mittels eines Verbindungsstutzens, insbesondere ein Fluidverbindungselement zum Herstellen einer Fluidverbindung mittels eines Verbindungsstutzens in einem Fahrzeug.

In einem Fahrzeug wird eine Vielzahl von Fluidleitungen, wie z.B. Fluidschläuche oder Fluidrohre, benötigt, um unterschiedliche Arten von Fluid, wie z.B. Motoröl in einer Getriebeölleitung oder Kraftstoff in einer Kraftstoffleitung, zu leiten. Um verschiedene Fluidleitungen in einem räumlich begrenzten Bauraum eines Fahrzeuges miteinander zu verbinden, werden Fluidverbindungselemente verwendet, durch welche Fluidverbindungen mittels eines Verbindungsstutzens hergestellt werden können. Herkömmliche Fluidverbindungselemente weisen oftmals einen signifikanten Bauraumbedarf und ein erhöhtes Eigengewicht auf, sind oftmals nicht ausreichend kostengünstig herstellbar und müssen oftmals aufwendig montiert werden.

In der DE 10 2004 053 538 A1 ist eine Kupplungsvorrichtung zum Verbinden von Leitungen mit einer Halteeinrichtung, die ein Außenteil und ein im Außenteil angeordnetes Innenteil aufweist, offenbart.

In der DE 10 2004 053 539 A1 ist eine Kupplungsvorrichtung zum Verbinden von Leitungen mit einer Halteeinrichtung, die in einem Gehäuse angeordnet ist, und einem Leitungsende, das in das Gehäuse einführbar und mit der Halteeinrichtung arretierbar ist, offenbart.

In der DE 10 2004 053 541 A1 ist eine Kupplungsvorrichtung zum Verbinden von Leitungen mit einer Halteeinrichtung, die ein Außenteil und ein im Außenteil angeordnetes Innenteil aufweist, offenbart, wobei das Innenteil zwischen einer Arretierstellung und einer Lösestellung in Längsrichtung der Halteeinrichtung bewegbar ist.

Es ist die der Erfindung zugrundeliegende Aufgabe, ein Fluidverbindungselement zum Herstellen einer Fluidverbindung mittels eines Verbindungsstutzens anzugeben, welches vorteilhafte Eigenschaften aufweist.

Diese Aufgabe wird durch die Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Fluidverbindungselement zum Herstellen einer Fluidverbindung mittels eines Verbindungsstutzens gelöst, mit einem Aufnahmestutzen zum Aufnehmen des Verbindungsstutzens, einer Arretierungshülse, welche in dem Aufnahmestutzen axial verschiebbar angeordnet und ausgebildet ist, den Verbindungsstutzen aufzunehmen, wobei die Arretierungshülse ein Arretierelement aufweist, welches ausgebildet ist, den in der Arretierungshülse aufgenommenen Verbindungsstutzen zu arretieren, einem Betätigungselement, das ausgebildet ist, die Arretierungshülse für das Lösen der Arretierung festzusetzen, sodass der Verbindungsstutzen aus der Arretierungshülse herausführbar ist, und einer rotierbaren Außenhülse, welche den Aufnahmestutzen rotierbar umschließt und eine Lösestellung für das Betätigen des Betätigungselementes zum Lösen der Arretierung und eine Sicherungsstellung zum Unterbinden des Lösens der Arretierung durch das Betätigungselement aufweist, wobei die rotierbare Außenhülse zwischen der Lösestellung und der Sicherungsstellung rotierbar ist.

Dadurch wird beispielsweise der technische Vorteil erreicht, dass die rotierbare Außenhülse durch den Nutzer des Fluidverbindungselements zwischen der Lösestellung und der Sicherungsstellung rotiert werden kann.

Wenn der Nutzer des Fluidverbindungselements die Arretierung des Verriegelungsstutzens lösen will, dann rotiert der Nutzer die rotierbare Außenhülse in die Lösestellung.

In der Lösestellung der Außenhülse ist das Betätigungselement zugänglich, so dass der Nutzer das Betätigungselement betätigen kann. Durch das Betätigen des Betätigungselements wird die Arretierungshülse festgesetzt und ist dadurch nicht mehr axial innerhalb des Aufnahmestutzens verschiebbar, so dass die Arretierung des Verriegelungsstutzens gelöst und der Verriegelungsstutzen aus dem Aufnahmestutzen herausgeführt werden kann.

Wenn der Nutzer des Fluidverbindungselements ein Lösen der Arretierung des Verriegelungsstutzens unterbinden will, dann rotiert der Nutzer die rotierbare Außenhülse in die Sicherungsstellung.

In der Sicherungsstellung der Außenhülse ist das Betätigungselement nicht zugänglich, so dass der Nutzer das Betätigungselement nicht betätigen kann. Somit wird in der Sicherungsstellung die Arretierungshülse nicht durch das Betätigungselement festgesetzt, die Arretierungshülse ist innerhalb des Aufnahmestutzens weiterhin axial verschiebbar und das Lösen der Arretierung des Verbindungsstutzens wird unterbunden.

Somit kann in der Sicherungsstellung ein unbeabsichtigtes Lösen der Fluidverbindung zwischen dem Aufnahmestutzen und dem Verbindungsstutzen verhindert werden, da das Betätigungselement in der Sicherungsstellung z.B. nicht zugänglich, bzw. nicht wirksam mit der Arretierungshülse interagieren kann, und das Betätigungselement die Arretierungshülse in der Sicherungsstellung somit nicht festsetzen kann, wodurch ein Lösen der Arretierung des Verbindungsstutzens verhindert wird.

Somit stellt die Sicherungsstellung der rotierbaren Außenhülse z.B. auch bei einem Unfall sicher, dass sich die Fluidverbindung zwischen dem Aufnahmestutzen und dem Verbindungsstutzen nicht unbeabsichtigt löst.

Ein Lösen der Fluidverbindung benötigt somit unterschiedliche Handhabungsschritte durch den Nutzer, welche z.B. unterschiedlich gerichtete Bewegungen des Nutzers umfassen, welche nicht zufällig auftreten. Zuerst muss die rotierbare Außenhülse von der Sicherungsstellung in die Lösestellung durch den Nutzer rotiert werden, bevor anschließend das Betätigungselement, z.B. durch ein Drücken des Betätigungselements, durch den Nutzer betätigt wird und die Arretierungshülse zum Lösen der Arretierung des Verbindungsstutzens festgesetzt wird.

In einer vorteilhaften Ausführungsform ist die rotierbare Außenhülse durch eine Rotation in einer ersten Rotationsrichtung von der Sicherungsstellung in die Lösestellung rotierbar, und/oder ist die rotierbare Außenhülse durch eine Rotation in einer der ersten Rotationsrichtung entgegengesetzten zweiten Rotationsrichtung von der Lösestellung in die Sicherungsstellung rotierbar.

In einer vorteilhaften Ausführungsform ist in der Lösestellung der rotierbaren Außenhülse das Betätigungselement in einer Betätigungsrichtung zum Festsetzen der Arretierungshülse und des Lösens der Arretierung des Verbindungsstutzens betätigbar, wobei die Betätigungsrichtung unterschiedlich zu der ersten und zweiten Rotationsrichtung ist.

Insbesondere ist das Betätigungselement in der Betätigungsrichtung auf die Arretierungshülse zu drückbar, um die Arretierungshülse festzusetzen.

Der Verbindungsstutzen gemäß der vorliegenden Offenbarung kann insbesondere als ein Stutzen gemäß der SAE-Norm -SAE 2044- ausgebildet sein.

Insbesondere können der Verbindungsstutzen, der Aufnahmestutzen, die Außenhülse und/oder die Arretierungshülse aus einem Kunststoff, insbesondere aus einem für den Transport des betreffenden Fluids geeigneten Thermoplast gefertigt sein. Insbesondere kann der Verbindungsstutzen aus Polyester, Polyamid, Fluorthermoplast und/oder Polyolefin, insbesondere aus einem Polyamid, wie z.B. Polyamid 12, Polyamid 610 und/oder Polyamid 6, gefertigt sein. Insbesondere kann der Kunststoff Faser- und/oder Mineral-verstärkt ausgebildet sein.

Insbesondere kann der Aufnahmestutzen und/oder die rotierbare Außenhülse aus Polyamid (PA), Polyoxymethylen (POM), Polyphenylensulfid (PPS), Polyphthalamid (PPA) und/oder Polyetheretherketon (PEEK) gefertigt sein. Insbesondere kann der Aufnahmestutzen ebenfalls aus einem leitfähig ausgerüsteten Kunststoff ausgebildet sein.

Insbesondere können der Verbindungsstutzen, der Aufnahmestutzen und/oder die Außenhülse aus einem Metall, wie z.B. Eisen, Stahl oder Aluminium, oder aus einer anderen für den Transport des betreffenden Fluids geeigneten Metalllegierung gefertigt sein. Die Arretierungshülse kann insbesondere aus Stahl gefertigt sein.

In einer vorteilhaften Ausführungsform ist das Arretierelement ausgebildet, den in der Arretierungshülse aufgenommenen Verbindungsstutzen mit einer Arretierungskraft zu arretieren, und ist das Betätigungselement ausgebildet, in der Lösestellung der Außenhülse die Arretierungshülse für das Lösen der Arretierung festzusetzen, sodass der Verbindungsstutzen gegen die Arretierungskraft aus der Arretierungshülse herausführbar ist.

Durch das Festsetzen der Arretierungshülse mittels des Betätigungselements kann die Arretierungshülse in der Lösestellung nicht mehr axial innerhalb des Aufnahmestutzens verschoben werden. Wenn das Betätigungselement die Arretierungshülse festsetzt, kann die durch das Arretierelement aufgebrachte Arretierungskraft durch ein Herausführen des Verbindungsstutzens aus der Arretierungshülse überwunden werden. Dies geschieht insbesondere dadurch, dass das Arretierelement als ein verformbares Arretierelement ausgebildet ist, welches durch die Herausführbewegung des Verbindungsstutzens verformt wird, und dadurch den Verriegelungsstutzen nicht mehr wirksam arretiert.

In einer vorteilhaften Ausführungsform weist der Verbindungsstutzen einen Stutzenvorsprung, insbesondere einen den Verbindungsstutzen umlaufenden Stutzenvorsprung auf, wobei das Arretierelement ausgebildet ist, in den Stutzenvorsprung einzugreifen, um den Verbindungsstutzen innerhalb der Arretierungshülse zu verriegeln.

In einer vorteilhaften Ausführungsform weist die Arretierungshülse eine Mehrzahl von, insbesondere zwei, drei, vier, fünf oder sechs, Arretierungselemente auf, welche ausgebildet sind, den in der Arretierungshülse aufgenommenen Verbindungsstutzen zu arretieren, insbesondere in den Stutzenvorsprung des Verbindungsstutzens einzugreifen. Insbesondere sind jeweils zwei der Mehrzahl von Arretierungselementen gegenüberliegend in der Arretierungshülse angeordnet.

In einer vorteilhaften Ausführungsform ist das zumindest eine Arretierelement als ein Haken, insbesondere Rasthaken oder Schnapphaken, eine Noppe, insbesondere eine elastisch verformbare Noppe, eine Nocke, eine Rippe und/oder ein Steg geformt, und ist ausgebildet in den Verbindungsstutzen, insbesondere in einen Stutzenvorsprung des Verbindungsstutzens, einzugreifen.

In einer vorteilhaften Ausführungsform ist das zumindest eine Arretierelement während eines Einführens des Verbindungsstutzens entlang einer Einführrichtung durch einen Kontakt mit dem Verbindungsstutzen, insbesondere durch einen Kontakt mit einem Stutzenvorsprung des Verbindungsstutzens, in der Einführrichtung verformbar, um ein Einführen des Verbindungsstutzens in die Arretierungshülse zu ermöglichen.

Dadurch wird beispielsweise der technische Vorteil erreicht, dass die Verformbarkeit des Arretierelements sicherstellt, dass der Verbindungsstutzen in einem ersten Schritt in die Arretierungshülse eingeführt werden kann. Während des Einführens des Verbindungsstutzens drückt insbesondere der Stutzenvorsprung der Verbindungsstutzens entlang der Einführrichtung gegen die Arretierungshülse und verschiebt die Arretierungshülse entlang der Einführrichtung in eine nach hinten verlagerte axiale Stellung, wodurch das Arretierelement radial beweglich freigegeben wird und sich das Arretierelement radial, also orthogonal zur Einführrichtung, verformt, insbesondere elastisch verformt, so dass der Stutzenvorsprung das Arretierelement passieren kann und somit der Verbindungsstutzen wirksam in die Arretierungshülse eingeführt werden kann.

In einer vorteilhaften Ausführungsform ist das Arretierelement als ein reversibel verformbares, insbesondere elastisch verformbares, Arretierelement ausgebildet, welches nach dem Einführen des Verbindungsstutzens entgegen der Einführrichtung reversibel, insbesondere elastisch, verformbar ist, um den Vorsprung des in der Arretierungshülse aufgenommenen Verbindungsstutzens zu hintergreifen und den Verbindungsstutzen zu arretieren.

Dadurch wird beispielsweise der technische Vorteil erreicht, dass durch die reversible, insbesondere elastische, Verformbarkeit des reversibel insbesondere elastisch verformbaren Arretierelements ein wirksames Einführen des Verbindungsstutzens und eine wirksame Arretierung des Verbindungsstutzens durch dasselbe Element bereitgestellt werden. Hierbei wird die wirksame Arretierung des Verbindungsstutzens insbesondere durch ein Einschnappen des Arretierelements hinter den Stutzenvorsprung des Verbindungsstutzens sichergestellt.

In einer vorteilhaften Ausführungsform weist das Fluidverbindungselement eine Mehrzahl von, insbesondere zwei, drei oder vier Betätigungselemente auf. Insbesondere sind jeweils zwei der Mehrzahl von Betätigungselementen gegenüberliegend in dem Fluidverbindungselement angeordnet.

In einer vorteilhaften Ausführungsform weist das Fluidverbindungselement zwei Betätigungselemente auf, welche gleichzeitig betätigt werden müssen, um die Arretierungshülse für das Lösen der Arretierung festzusetzen, wobei insbesondere durch die gleichzeitige Betätigung der beiden Betätigungselemente das zumindest eine Arretierelement der Arretierungshülse radial verlagerbar freigegeben wird, so dass der Verbindungsstutzen aus der Arretierungshülse herausführbar ist.

In einer vorteilhaften Ausführungsform weist das zumindest eine Betätigungselement einen Druckknopf auf, wobei das Betätigungselement durch Drücken des Druckknopfs radial nach innen verlagert werden kann, um die Arretierungshülse festzusetzen.

In einer vorteilhaften Ausführungsform ist das Betätigungselement ausgebildet, die Arretierungshülse durch einen formschlüssigen und/oder kraftschlüssigen Kontakt mit der Arretierungshülse festzusetzen.

In einer vorteilhaften Ausführungsform ist das Betätigungselement als ein radial verlagerbarer Arm des Aufnahmestutzens ausgebildet, wobei die rotierbare Außenhülse in der Sicherungsstellung den radial verlagerbaren Arm abdeckt, um das Lösen der Arretierung durch den radial verlagerbaren Arm zu unterbinden, wobei die rotierbare Außenhülse eine Betätigungsöffnung aufweist, und wobei in der Lösestellung der rotierbaren Außenhülse die Betätigungsöffnung und der radial verlagerbare Arm fluchtend zueinander angeordnet sind, und wobei in der Lösestellung der rotierbaren Außenhülse der radial verlagerbare Arm des Aufnahmestutzens radial nach innen verlagerbar ist, um die Arretierungshülse für das Lösen der Arretierung festzusetzen.

Dadurch wird beispielsweise der technische Vorteil erreicht, dass in der Lösestellung der Außenhülse der Nutzer des Fluidverbindungselements durch die Betätigungsöffnung der Außenhülse wirksam den radial verlagerbaren Arm betätigen und radial nach innen verlagern kann, um die Arretierungshülse festzusetzen. Insbesondere ist der radial verlagerbare Arm als ein radial federelastischer Arm ausgebildet. Insbesondere weist der radial verlagerbare Arm einen Druckknopf auf. Insbesondere weist die rotierbare Außenhülse eine Abdeckung auf, welche in der Sicherungsstellung den radial verlagerbaren Arm abdeckt.

In einer vorteilhaften Ausführungsform ist das Betätigungselement als ein radial verlagerbarer Arm des Aufnahmestutzens ausgebildet, wobei die rotierbare Außenhülse in der Sicherungsstellung den radial verlagerbaren Arm abdeckt, um das Lösen der Arretierung durch den radial verlagerbaren Arm zu unterbinden, wobei die rotierbare Außenhülse einen weiteren radial verlagerbaren Arm aufweist, welcher ausgebildet ist, den radial verlagerbaren Arm zum Festsetzen der Arretierungshülse zu betätigen, wobei in der Lösestellung der rotierbaren Außenhülse der weitere radial verlagerbare Arm und der radial verlagerbare Arm fluchtend zueinander angeordnet sind, und wobei in der Lösestellung der rotierbaren Außenhülse der weitere radial verlagerbare Arm der Außenhülse ausgebildet ist, den radial verlagerbaren Arm des Aufnahmestutzens radial nach innen zu verlagern, um die Arretierungshülse für das Lösen der Arretierung festzusetzen.

Dadurch wird beispielsweise der technische Vorteil erreicht, dass der Nutzer den radialen Arm des Aufnahmestutzens nicht direkt betätigt, sondern der Nutzer den weiteren radialen Arm der Außenhülse radial nach innen drückt, wodurch der weitere radiale Arm den radialen Arm nach innen drückt und die Arretierungshülse festsetzt. Insbesondere ist der weitere radial verlagerbare Arm als ein radial federelastischer Arm ausgebildet. Insbesondere weist der weitere radial verlagerbare Arm einen Druckknopf auf.

In einer vorteilhaften Ausführungsform weist der weitere radial verlagerbare Arm der rotierbaren Außenhülse ein weiteres Profil, insbesondere einen weiteren Vorsprung oder eine weitere Ausnehmung, auf, welches in der Lösestellung der Außenhülse in ein weiteres Gegenprofil, insbesondere eine weitere Ausnehmung oder einen weiteren Vorsprung, des radial verlagerbaren Arms des Aufnahmestutzens eingreift, um die Arretierungshülse für das Lösen der Arretierung festzusetzen.

Dadurch wird beispielsweise der technische Vorteil erreicht, dass durch den Kontakt zwischen dem weiteren Profil und dem weiteren Gegenprofil eine wirksame Übertragung der radialen Bewegung zwischen dem weiteren radialen Arm und dem radialen Arm sichergestellt wird.

In einer vorteilhaften Ausführungsform ist das Betätigungselement als ein radial verlagerbarer Arm der rotierbaren Außenhülse ausgebildet, wobei in der Sicherungsstellung der rotierbaren Außenhülse der radial verlagerbare Arm der Außenhülse zu der Arretierungshülse, insbesondere zu einem Halterungssteg der Arretierungshülse, nicht fluchtend angeordnet ist, um das Lösen der Arretierung durch den radial verlagerbaren Arm zu unterbinden, und wobei in der Lösestellung der rotierbaren Außenhülse der radial verlagerbare Arm der rotierbaren Außenhülse zu der Arretierungshülse, insbesondere zu dem Halterungssteg der Arretierungshülse, fluchtend angeordnet ist, und wobei der radial verlagerbare Arm der rotierbaren Außenhülse radial nach innen verlagerbar ist, um die Arretierungshülse für das Lösen der Arretierung festzusetzen.

Dadurch wird beispielsweise der technische Vorteil erreicht, dass der Nutzer den an der Außenhülse angeordneten radial verlagerbaren Arm der Außenhülse direkt betätigen und radial nach innen verlagern kann, um die Arretierungshülse festzusetzen. Insbesondere weist der Aufnahmestutzen eine Stutzenöffnung auf, wobei der radial verlagerbare Arm der Außenhülse in der Lösestellung der Außenhülse die Stutzenöffnung durchbricht, um in der Lösestellung die Arretierungshülse für das Lösen der Arretierung festzusetzen.

In einer vorteilhaften Ausführungsform ist das Betätigungselement als ein an einer Hülseninnenseite der rotierbaren Außenhülse angeordneter Hülsenvorsprung ausgebildet, wobei die Arretierungshülse, insbesondere ein Halterungssteg der Arretierungshülse, ein Gegenprofil, insbesondere eine Ausnehmung, aufweist, wobei in der Lösestellung der rotierbaren Außenhülse der Hülsenvorsprung der rotierbaren Außenhülse in das Gegenprofil, insbesondere Ausnehmung, eingreift, um die Arretierungshülse für das Lösen der Arretierung festzusetzen, und wobei in der Sicherungsstellung der rotierbaren Außenhülse der Hülsenvorsprung der rotierbaren Außenhülse nicht in das Gegenprofil der Arretierungshülse eingreift, um das Lösen der Arretierung zu unterbinden.

Dadurch wird beispielsweise der technische Vorteil erreicht, dass in der Lösestellung der Außenhülse der an der Hülseninnenseite der Außenhülse angeordnete Hülsenvorsprung wirksam in das Gegenprofil der Arretierungshülse eingreifen kann, um die Arretierungshülse festzusetzen.

In einer vorteilhaften Ausführungsform ist das Gegenprofil als eine Führungsnut der Arretierungshülse, insbesondere des Halterungssteges der Arretierungshülse, ausgebildet, wobei der Hülsenvorsprung der rotierbaren Außenhülse durch eine Rotation der rotierbaren Außenhülse von der Sicherungsstellung in die Lösestellung der Außenhülse in die Führungsnut einführbar ist.

Dadurch wird beispielsweise der technische Vorteil erreicht, dass durch das Rotieren der Außenhülse die Außenhülse nicht nur von der Sicherungsstellung in die Lösestellung überführt wird, sondern auch gleichzeitig der Hülsenvorsprung zum Festsetzen der Arretierungshülse in das Gegenprofil der Arretierungshülse eingeführt wird.

In einer vorteilhaften Ausführungsform weist die Führungsnut eine Nutöffnung auf, durch welche der Hülsenvorsprung in die Führungsnut einführbar ist, und weist die Führungsnut einen Nutanschlag auf, an welcher der in die Führungsnut eingeführte Hülsenvorsprung anlegbar ist, um eine Bewegung des Hülsenvorsprungs in der Führungsnut zu begrenzen.

Dadurch wird beispielsweise der technische Vorteil erreicht, dass die Führungsnut ein wirksames Führen des Hülsenvorsprungs in der Führungsnut sicherstellt. Der Hülsenvorsprung wird durch das Rotieren der Außenhülse durch die Nutöffnung in die Führungsnut eingeführt und entlang der Führungsnut geführt, bis der Hülsenvorsprung an dem Nutanschlag anliegt, um die Bewegung des Hülsenvorsprungs in der Führungsnut zu begrenzen. In der Lösestellung der Außenhülse liegt der Hülsenvorsprung somit an dem Nutanschlag an und setzt die Arretierungshülse wirksam fest.

In einer vorteilhaften Ausführungsform weist die Führungsnut eine Nuterstreckungsrichtung auf, welche gegenüber einer Längsachse der Arretierungshülse nicht orthogonal angeordnet ist, oder welche gegenüber einer Längsachse der Arretierungshülse orthogonal angeordnet ist.

Dadurch wird beispielsweise der technische Vorteil erreicht, dass durch eine nicht orthogonale Anordnung der Führungsnut gegenüber der Längsachse der Arretierungshülse bei einer Rotation der Außenhülse von der Sicherungsstellung in die Lösestellung der Hülsenvorsprung der Außenhülse entlang der Wandung der Führungsnut derart geführt wird, dass durch die Rotationsbewegungskomponente der Außenhülse noch eine Translationsbewegungskomponente der Arretierungshülse auftritt durch welche die Arretierungshülse entlang der Längsachse der Außenhülse, bzw. der Längsachse der Arretierungshülse, auf den Aufnahmestutzen, insbesondere gegen einen hinteren Anschlag des Aufnahmestutzens, geschraubt wird. Insbesondere beträgt ein Nutwinkel zwischen der Nuterstreckungsrichtung und der Längsachse der Arretierungshülse zwischen 1° und 89°, insbesondere zwischen 20° und 60°.

Durch eine orthogonale Anordnung der Führungsnut gegenüber der Längsachse der Arretierungshülse tritt bei einer Rotation der Außenhülse von der Sicherungsstellung in die Lösestellung keine Translationsbewegungskomponente der Arretierungshülse entlang der Längsachse der Arretierungshülse auf. Dadurch ergibt sich der technische Vorteil, dass die Außenhülse bei unter Zugbelastung stehendem, verriegeltem Verbund aus Verbindungsstutzen und Fluidverbindungselement nicht von der Sicherungsstellung in die Lösestellung gedreht werden kann. Dadurch wird ein unbeabsichtigtes Lösen der Fluidverbindung zusätzlich verhindert.

In einer weiteren vorteilhaften Ausführungsform ist der Hülsenvorsprung der Außenhülse durch einen Vorsprungssteg mit einem Hülsengehäuse der Außenhülse verbunden. Insbesondere weist der Vorsprungssteg eine Stegerstreckungsrichtung auf, welche gegenüber einer Längsachse der Außenhülse nicht orthogonal oder orthogonal angeordnet ist. Insbesondere beträgt ein Stegwinkel zwischen der Stegerstreckungsrichtung und einer Längsachse der Außenhülse bei einer nicht orthogonalen Anordnung zwischen 1° und 89°, insbesondere zwischen 20° und 60°.

Insbesondere ist die Stegerstreckungsrichtung des Vorsprungsstegs der Außenhülse und die Nuterstreckungsrichtung der Führungsnut der Arretierungshülse gleichgerichtet, so dass der Nutzer alleine durch die Stegerstreckungsrichtung von außen auch die Nuterstreckungsrichtung erkennen kann, und dass der Nutzer somit visuell erfassen kann, ob durch eine Rotation der Außenhülse eine Translationsbewegungskomponente auf die Arretierungshülse ausgeübt wird oder nicht.

In einer weiteren vorteilhaften Ausführungsform weist der Aufnahmestutzen eine Stutzenöffnung auf, wobei das Betätigungselement in der Lösestellung der Außenhülse die Stutzenöffnung durchbricht, um in der Lösestellung der Außenhülse die Arretierungshülse für das Lösen der Arretierung festzusetzen.

In einer weiteren vorteilhaften Ausführungsform weist das Betätigungselement ein Profil, insbesondere einen Vorsprung oder eine Ausnehmung, auf, welches in der Lösestellung der Außenhülse in ein Gegenprofil, insbesondere eine Ausnehmung oder einen Vorsprung, der Arretierungshülse, insbesondere eines Halterungsstegs der Arretierungshülse, eingreift, um die Arretierungshülse für das Lösen der Arretierung festzusetzen.

Dadurch wird beispielsweise der technische Vorteil erreicht, dass durch den Kontakt zwischen dem Profil des Betätigungselements und dem Gegenprofil der Arretierungshülse die Arretierungshülse wirksam festgesetzt werden kann.

In einer weiteren vorteilhaften Ausführungsform ist das Arretierelement während eines Einführens des Verbindungsstutzens entlang einer Einführrichtung durch einen Kontakt mit dem Verbindungsstutzen, insbesondere mit einem Stutzenvorsprung des Verbindungsstutzens, insbesondere mit einem keilförmigen Stutzenvorsprung, radial nach außen verformbar, um ein Einführen des Verbindungsstutzens in die Arretierungshülse zu ermöglichen, wobei das Arretierelement insbesondere als ein federelastisches Arretierelement geformt ist, welches ausgebildet ist, nach dem Einführen des Verbindungsstutzens in die Arretierungshülse radial nach innen einzuschnappen, um den Verbindungsstutzen in der Arretierungshülse zu verriegeln.

Dadurch wird beispielsweise der technische Vorteil erreicht, dass durch das Einschnappen des Arretierelements in den Verbindungsstutzen, insbesondere hinter einen Stutzenvorsprung des Verbindungsstutzens, eine besonders wirksame Arretierung des Verbindungsstutzens sichergestellt werden kann.

In einer weiteren vorteilhaften Ausführungsform weist der Aufnahmestutzen eine weitere Stutzenöffnung auf, weist das Arretierelement einen Anschlag auf, welcher ausgebildet ist, an einem Anschlagsrand der weiteren Stutzenöffnung anzuliegen, um in der Sicherungsstellung der Außenhülse eine Verschiebung der axial verschiebbaren Arretierungshülse zu begrenzen.

Dadurch wird beispielsweise der technische Vorteil erreicht, dass durch das Anliegen des Anschlags des Arretierelements an dem Anschlagrand der weiteren Stutzenöffnung in der Sicherungsstellung der Außenhülse eine geringe axiale Bewegung der Arretierungshülse in dem Aufnahmestutzen gewährleistet ist, die ein vollständiges Verriegeln des Verbindungsstutzens mit der Arretierungshülse in einer vorderen Stellung des Aufnahmestutzens ermöglicht.

In einer weiteren vorteilhaften Ausführungsform ist in der Sicherungsstellung der Außenhülse das Arretierelement der axial verschiebbaren Arretierungshülse während eines Herausführens des Verbindungsstutzens entgegensetzt zu einer Einführrichtung durch das Anliegen des Anschlags an dem Anschlagrand nicht radial nach außen verformbar, um ein Lösen der Arretierung des Verbindungsstutzens zu unterbinden.

Dadurch wird beispielsweise der technische Vorteil erreicht, dass in der Sicherungsstellung der Außenhülse die Arretierungshülse durch das Betätigungselement nicht festgesetzt ist, so dass die Arretierungshülse in dem Aufnahmestutzen axial verschiebbar angeordnet ist. Wird hierbei die axial verschiebbare Arretierungshülse bis zu einem Anliegen des Anschlags des Arretierelements an dem Anschlagsrand der weiteren Stutzenöffnung verschoben, dann kann das Arretierelement nicht radial nach außen verformt werden und kann das Arretierelement somit auch durch eine weitere Herausziehbewegung des Verbindungsstutzens den Verbindungsstutzen nicht freigeben. Somit kann bei einer nicht festgesetzten Arretierungshülse die Arretierung des Verbindungsstutzens nicht gelöst werden.

Dadurch ergibt sich der weitere technische Vorteil, dass die Außenhülse bei unter Zugbelastung stehendem, verriegeltem Verbund aus Verbindungsstutzen und Fluidverbindungselement nicht von der Sicherungsstellung in die Lösestellung gedreht werden kann. Dadurch wird ein unbeabsichtigtes Lösen der Fluidverbindung zusätzlich verhindert.

In einer weiteren vorteilhaften Ausführungsform ist die durch das Betätigungselement festgesetzte Arretierungshülse axial nicht verschiebbar, wobei das Arretierelement der festgesetzten Arretierungshülse während eines Herausführens des Verbindungsstutzens aus der Arretierungshülse radial nach außen verformbar ist, um den Verbindungsstutzen freizugeben und die Arretierung des Verbindungsstutzens zu lösen.

Dadurch wird beispielsweise der technische Vorteil erreicht, dass in der Lösestellung der Außenhülse die Arretierungshülse durch das Betätigungselement festgesetzt ist, so dass die Arretierungshülse in dem Aufnahmestutzen nicht axial verschiebbar angeordnet ist. Wird hierbei bei einer festgesetzten Arretierungshülse versucht den Verbindungsstutzen aus der festgesetzten Arretierungshülse herauszuführen, insbesondere herauszuziehen, wird hierbei nicht die festgesetzte Arretierungshülse bewegt, sondern stattdessen das Arretierelement der Arretierungshülse radial nach außen verformt, so dass das Arretierelement den Verbindungsstutzen, insbesondere einen Stutzenvorsprung des Verbindungsstutzens, freigibt. Dadurch wird die Arretierung des Verbindungsstutzens gelöst und der Verbindungsstutzen kann aus der Arretierungshülse herausgeführt, insbesondere herausgezogen, werden. Somit kann bei einer festgesetzten Arretierungshülse die Arretierung des Verbindungsstutzens wirksam gelöst werden.

In einer weiteren vorteilhaften Ausführungsform weist die rotierbare Außenhülse einen konstanten Außendurchmesser auf, oder weist die rotierbare Außenhülse einen ersten Hülsenbereich und einen zweiten Hülsenbereich aufweist, wobei der erste Hülsenbereich einen ersten Außendurchmesser aufweist, wobei der zweite Hülsenbereich einen zweiten Außendurchmesser aufweist, und wobei der zweite Außendurchmesser geringer als der erste Außendurchmesser ist.

In einer weiteren vorteilhaften Ausführungsform ist an der rotierbaren Außenhülse zumindest ein Greifelement zum Rotieren der rotierbaren Außenhülse angeordnet ist, wobei das Greifelement insbesondere als ein Greifvorsprung ausgebildet ist.

Dadurch wird beispielsweise der technische Vorteil erreicht, dass der Nutzer das Greifelement wirksam greifen kann, um die rotierbare Außenhülse wirksam zu rotieren. Insbesondere weist das Greifelement eine Mehrzahl von, insbesondere zwei bis fünf, Greifvorsprünge auf, welche insbesondere als vorspringende Rippen, Riffelung, Rautierung und/oder als zurück versetzte halbmondförmige Greifvorsprünge ausgebildet sind.

In einer weiteren vorteilhaften Ausführungsform ist an einer Stutzeninnenseite des Aufnahmestutzens zumindest eine Aufnahmenut angeordnet, wobei die Arretierungshülse zumindest einen Längssteg aufweist, welcher in die jeweilige Aufnahmenut einführbar ist, um eine Drehung der Arretierungshülse gegenüber dem Aufnahmestutzen zu unterbinden.

In einer weiteren vorteilhaften Ausführungsform ist an einer Stutzeninnenseite des Aufnahmestutzens zumindest eine weitere Aufnahmenut angeordnet, wobei die Arretierungshülse zumindest einen Halterungssteg aufweist, welcher in die jeweilige weitere Aufnahmenut einführbar ist, um eine Drehung der Arretierungshülse gegenüber dem Aufnahmestutzen zu unterbinden.

In einer weiteren vorteilhaften Ausführungsform weist das Fluidverbindungselement einen Leitungsabschnitt auf, welcher mit dem Aufnahmestutzen verbunden, insbesondere einstückig ausgebildet ist.

Dadurch wird beispielsweise der technische Vorteil erreicht, dass Fluid, welches durch den in dem Aufnahmestutzen aufgenommenen Verbindungsstutzen geleitet wird, wirksam durch den Leitungsabschnitt weitergeführt werden kann.

In einer weiteren vorteilhaften Ausführungsform weist das Fluidverbindungselement einen weiteren Leitungsabschnitt auf, welcher mit dem Leitungsabschnitt verbunden, insbesondere einstückig ausgebildet ist, wobei sich der weitere Leitungsabschnitt insbesondere winklig oder gleichachsig gegenüber dem Leitungsabschnitt erstreckt, und wobei der weitere Leitungsabschnitt insbesondere umlaufende Vorsprünge zum Aufstecken eines Fluidschlauchs aufweist.

Dadurch wird beispielsweise der technische Vorteil erreicht, dass Fluid durch den Leitungsabschnitt durch den weiteren Leitungsabschnitt und durch den Fluidschlauch wirksam durch das Fluidverbindungselement geleitet wird. Durch die winklige oder gleichachsige Anordnung zwischen dem Leitungsabschnitt und dem weiteren Leitungsabschnitt kann der verfügbare Bauraum wirksam genutzt werden.

Gemäß einem zweiten Aspekt der Erfindung wird die Aufgabe durch eine Fluidverbindungsanordnung zum Herstellen einer Fluidverbindung gelöst, mit dem Fluidverbindungselement nach dem ersten Aspekt, und einem Verbindungsstutzen, welcher in der Arretierungshülse aufgenommen ist, und welcher durch das Arretierelement in der Arretierungshülse verriegelt ist.

Dadurch wird beispielsweise der technische Vorteil erreicht, dass die Fluidverbindungsanordnung eine wirksame Fluidverbindung zwischen dem Verbindungsstutzen und dem Fluidverbindungselement bereitstellt.

Die in Bezug auf das Fluidverbindungselement gemäß dem ersten Aspekt angeführten vorteilhaften Ausführungsformen gelten ebenso als vorteilhafte Ausführungsformen der Fluidverbindungsanordnung gemäß dem zweiten Aspekt.

Ausführungsbeispiele der Erfindung sind in den Zeichnungen dargestellt und werden im Folgenden näher beschrieben.

Es zeigen:
- Fig. 1: eine Explosionsdarstellung eines Fluidverbindungselements gemäß einer ersten Ausführungsform;
- Fig. 2A: eine Schnittdarstellung des Fluidverbindungselements gemäß der ersten Ausführungsform in einer Sicherungsstellung;
- Fig. 2B: eine Schnittdarstellung des Fluidverbindungselements gemäß der ersten Ausführungsform in einer Lösestellung;
- Fig. 3: eine Explosionsdarstellung eines Fluidverbindungselements gemäß einer zweiten Ausführungsform;
- Fig. 4A: eine Schnittdarstellung des Fluidverbindungselements gemäß der zweiten Ausführungsform in einer Sicherungsstellung;
- Fig. 4B: eine Schnittdarstellung des Fluidverbindungselements gemäß der zweiten Ausführungsform in einer Lösestellung;
- Fig. 5: eine Explosionsdarstellung eines Fluidverbindungselements gemäß einer dritten Ausführungsform;
- Fig. 6A: eine Schnittdarstellung des Fluidverbindungselements gemäß der dritten Ausführungsform in einer Sicherungsstellung;
- Fig. 6B: eine Schnittdarstellung des Fluidverbindungselements gemäß der dritten Ausführungsform in einer Lösestellung;
- Fig. 7: eine Explosionsdarstellung eines Fluidverbindungselements gemäß einer vierten Ausführungsform;
- Fig. 8A: eine Schnittdarstellung des Fluidverbindungselements gemäß der vierten Ausführungsform in einer Sicherungsstellung;
- Fig. 8B: eine Schnittdarstellung des Fluidverbindungselements gemäß der vierten Ausführungsform in einer Lösestellung;
- Fig. 8C: eine Darstellung einer Arretierungshülse des Fluidverbindungselements gemäß der vierten Ausführungsform;
- Fig. 9: eine Explosionsdarstellung eines Fluidverbindungselements gemäß einer fünften Ausführungsform;
- Fig. 10A: eine Schnittdarstellung des Fluidverbindungselements gemäß der fünften Ausführungsform in einer Sicherungsstellung;
- Fig. 10B: eine Schnittdarstellung des Fluidverbindungselements gemäß der fünften Ausführungsform in einer Lösestellung; und
- Fig. 10C: eine Darstellung einer Arretierungshülse des Fluidverbindungselements gemäß der fünften Ausführungsform.

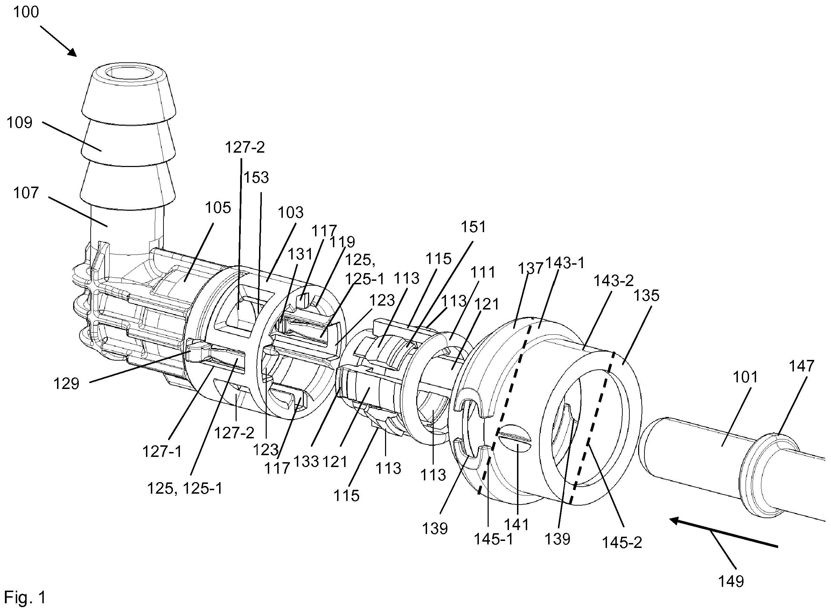

Fig. 1 zeigt eine Explosionsdarstellung eines Fluidverbindungselements gemäß einer ersten Ausführungsform. Das Fluidverbindungselement 100 dient zum Herstellen einer Fluidverbindung mittels eines Verbindungsstutzens 101 in einer Vielzahl von fluidführenden Systemen eines Fahrzeuges. Das Fluidverbindungselement 100 kann zur fluidtechnischen Verbindung von Kraftstoff-, Kühlflüssigkeit-, Ladeluft-, Bremsflüssigkeit-, Wasser-, SCR-, und/oder Getriebeölleitungen in Fahrzeugen eingesetzt werden. Das Fluidverbindungselement 100 kann alternativ auch beispielsweise in Kühlmittel-führenden Fluidleitungen, welche zur Kühlung von Batteriezellen in einem elektrisch angetriebenen Fahrzeug verwendet werden, eingesetzt werden.

In fluidführenden Systemen eines Fahrzeuges werden unterschiedliche Fluide, wie z.B. Gase oder Flüssigkeiten, teilweise unter hohem Druck und bei hohen Temperaturen geleitet. Aufgrund der beengten Bauraumsituation in einem Fahrzeug müssen verschiedene Leitungen der entsprechenden fluidführenden Systeme oftmals durch Verbindungsstutzen 101 miteinander verbunden werden, um eine wirksame Fluidleitung sicherzustellen. Hierbei werden an die fluidtechnischen Schnittstellen zwischen einer entsprechenden fluidführenden Leitung und einem entsprechenden Verbindungsstutzen 101 hohe Anforderungen in Bezug auf Stabilität und Dichtigkeit gestellt.

Um z.B. bei einer Demontage oder einem Bauteilwechsel die fluidtechnische Verbindung zwischen dem Fluidverbindungselement 100 und dem Verbindungsstutzen 101 zu lösen, weisen herkömmliche Fluidverbindungselement 100 hierzu Betätigungselemente auf. Hierbei kann in herkömmlichen Fluidverbindungselementen 100 unter Umständen der Fall eintreten, dass sich die fluidtechnische Verbindung zwischen dem Fluidverbindungselement 100 und dem Verbindungsstutzen 101 durch ein unbeabsichtigtes Betätigen des Betätigungselements löst, z.B. bei einem Fahrzeugunfall.

Um eine vorteilhafte Ergänzung zu herkömmlichen fluidtechnischen Verbindungselementen bereitzustellen, weisen die fluidtechnischen Verbindungselemente gemäß der vorliegenden Offenbarung einen vorteilhaften Entriegelungsmechanismus auf, welcher sich zwar weiterhin auf eine einfache Weise werkzeuglos lösen lässt, jedoch eine ungewollte Entriegelung, z.B. bei einem Fahrzeugunfall, verhindert.

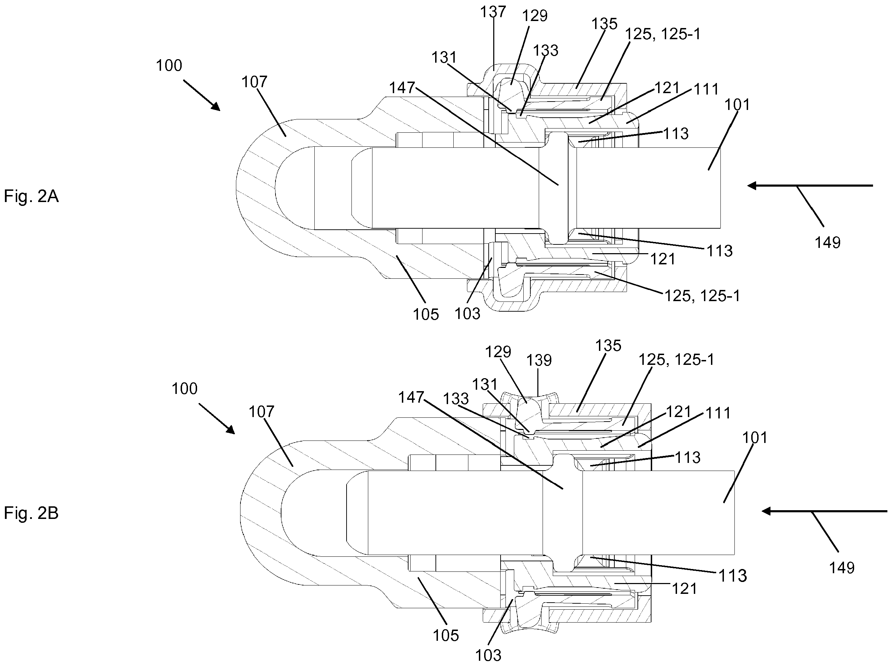

Das Fluidverbindungselement 100 gemäß der ersten Ausführungsform entsprechend der Fig. 1, sowie der Figuren 2A und 2B, umfasst einen Aufnahmestutzen 103 zum Aufnehmen des Verbindungsstutzens 101. Ferner weist das Fluidverbindungselement 100 einen Leitungsabschnitt 105 auf, welcher mit dem Aufnahmestutzen 103 verbunden, insbesondere einstückig ausgebildet ist.

Ferner weist das Fluidverbindungselement 100 einen weiteren Leitungsabschnitt 107 auf, welcher mit dem Leitungsabschnitt 105 verbunden, insbesondere einstückig ausgebildet ist. Wie in der Fig. 1 dargestellt, erstreckt sich hierbei der weitere Leitungsabschnitt 107 insbesondere winklig oder gleichachsig gegenüber dem Leitungsabschnitt 105. Der weitere Leitungsabschnitt 107 kann hierbei wirksam mit einem in Fig. 1 nicht dargestellten Fluidschlauch verbunden werden. Hierzu weist der weitere Leitungsabschnitt 107 insbesondere umlaufende Leitungsabschnittsvorsprünge 109 zum Aufstecken eines Fluidschlauchs auf.

Somit kann durch das Fluidverbindungselement 100 eine wirksame fluidtechnische Verbindung zwischen dem auf den weiteren Leitungsabschnitt 107 aufgesteckten Fluidschlauch und dem in dem Aufnahmestutzen 103 aufgenommenen Verbindungsstutzen 101 sichergestellt werden.

Das Fluidverbindungselement 100 weist eine Arretierungshülse 111 auf, welche in dem Aufnahmestutzen 103 axial verschiebbar angeordnet und ausgebildet ist, den Verbindungsstutzen 101 aufzunehmen. Hierbei weist die Arretierungshülse 111 zumindest ein Arretierelement 113, insbesondere vier Arretierelemente 113, auf, welches ausgebildet ist, den in der Arretierungshülse 111 aufgenommenen Verbindungsstutzen 101 zu arretieren.

Die Arretierungshülse 111 weist insbesondere zumindest einen Längssteg 115, insbesondere zwei Längsstege 115, auf, welcher während des Einführens der Arretierungshülse 111 in den Aufnahmestutzen 103 in eine Aufnahmenut 117 an einer Stutzeninnenseite 119 des Aufnahmestutzens 103 eingeführt wird. Dadurch kann eine Drehung der Arretierungshülse 111 gegenüber dem Aufnahmestutzen 103 verhindert werden.

Die Arretierungshülse 111 weist insbesondere zumindest einen Halterungssteg 121, insbesondere zwei Halterungsstege 121, auf, welcher während des Einführens der Arretierungshülse 111 in den Aufnahmestutzen 103 in eine weitere Aufnahmenut 123 an einer Stutzeninnenseite 119 des Aufnahmestutzens 103 eingeführt wird. Dadurch kann eine Drehung der Arretierungshülse 111 gegenüber dem Aufnahmestutzen 103 ebenfalls verhindert werden.

Das Fluidverbindungselement 100 weist zumindest ein Betätigungselement 125, insbesondere zwei Betätigungselemente 125 auf, das ausgebildet ist, die Arretierungshülse 111 für das Lösen der Arretierung des Verbindungsstutzens 101 festzusetzen, sodass der Verbindungsstutzen 101 aus der Arretierungshülse 111 herausführbar ist.

In der in Fig. 1, sowie in den Figuren 2A und 2B, dargestellten Ausführungsform ist das jeweilige Betätigungselement 125 als ein radial verlagerbarer Arm 125-1 des Aufnahmestutzens 103 ausgebildet. Der radial verlagerbare Arm 125-1 durchbricht hierbei eine Stutzenöffnung 127-1 des Aufnahmestutzens 103, um die in dem Aufnahmestutzen 103 eingeführte Arretierungshülse 111 für das Lösen der Arretierung des Verbindungsstutzens 101 festzusetzen.

Der Aufnahmestutzen 103 weist ferner noch weitere Stutzenöffnungen 127-2 auf.

Um das Betätigungselement 125, insbesondere den radial verlagerbaren Arm 125-1, zu betätigen, weist das Betätigungselement 125, 125-1 eine Drucktaste 129 auf, welche durch einen Nutzer des Fluidverbindungselements 100 drückbar ist, um den radial verlagerbaren Arm 125-1 radial nach innen zu verlagern.

Um die Arretierungshülse 111 festzusetzen, weist der radial verlagerbare Arm 125-1 ein Profil 131, insbesondere einen Vorsprung, auf, welches bei einer durch Drücken der Drucktaste 129 verursachten nach innen gerichteten Radialbewegung des radial verlagerbaren Arms 125-1 in ein Gegenprofil 133, insbesondere eine Ausnehmung, der Arretierungshülse 111, insbesondere eines Halterungssteges 121 der Arretierungshülse 111, eingreift, um die Arretierungshülse 111 für das Lösen der Arretierung des Verbindungsstutzens 101 festzusetzen.

Das Fluidverbindungselement 100 weist ferner eine rotierbare Außenhülse 135 auf, welche den Aufnahmestutzen 103 rotierbar umschließt. Auch wenn dies in Fig. 1 nicht dargestellt ist, ist die rotierbare Außenhülse 135 zwischen einer Lösestellung für das Betätigen des Betätigungselements 125 zum Lösen der Arretierung des Verbindungsstutzens 101 und einer Sicherungsstellung zum Unterbinden des Lösens der Arretierung des Verbindungsstutzens 101 durch das Betätigungselement 125 rotierbar.

Hierzu weist die rotierbare Außenhülse 135 eine Abdeckung 137 auf, welche in der Sicherungsstellung den radial verlagerbaren Arm 125-1 abdeckt, um eine Betätigung des radial verlagerbaren Arms 125-1 zu verhindern.

Hierzu weist die rotierbare Außenhülse 135, insbesondere die Abdeckung 137 der rotierbaren Außenhülse 125, eine Betätigungsöffnung 139, insbesondere zumindest zwei Betätigungsöffnungen 139, auf. In der Lösestellung der rotierbaren Außenhülse 135 sind die Betätigungsöffnung 139 und der radial verlagerbare Arm 125-1, insbesondere die Drucktaste 129, fluchtend zueinander angeordnet, so dass in der Lösestellung der radial verlagerbare Arm 125-1 radial nach innen verlagerbar ist, um die Arretierungshülse 111 für das Lösen der Arretierung des Verbindungsstutzens 101 festzusetzen.

An der rotierbaren Außenhülse 135 ist zumindest ein Greifelement 141, insbesondere zwei bis fünf Greifelemente 141, zum Rotieren der rotierbaren Außenhülse 135 angeordnet, wobei das Greifelement 141 insbesondere als vorspringende Rippen, Riffelung, Rautierung und/oder als zurück versetzte halbmondförmige Greifvorsprünge ausgebildet ist.

Wie in der Fig. 1 dargestellt ist, weist die rotierbare Außenhülse 135 einen ersten Hülsenbereich 143-1 und einen zweiten Hülsenbereich 143-2 auf, wobei der erste Hülsenbereich 143-1 einen ersten Außendurchmesser 145-1 aufweist, wobei der zweite Hülsenbereich 143-2 einen zweiten Außendurchmesser 145-2 aufweist, und wobei der zweite Außendurchmesser 145-2 geringer als der erste Außendurchmesser 145-1 ist.

Hinsichtlich der Arretierung des Verbindungsstutzens 101 durch die Arretierungshülse 111, wird auf das Folgende verwiesen. Das Arretierelement 113 ist ausgebildet einen Stutzenvorsprung 147 des in der Arretierungshülse 111 aufgenommen Verbindungsstutzen 101 zu hintergreifen, um den Verbindungsstutzen innerhalb der Arretierungshülse 111 zu verriegeln.

Das Arretierelement 113 ist insbesondere als ein federelastisches Arretierelement 113 geformt und umfasst insbesondere einen Haken, insbesondere Rasthaken oder Schnapphaken, eine Noppe, insbesondere eine elastisch verformbare Noppe, eine Nocke, eine Rippe und/oder einen Steg.

Hierzu ist das Arretierelement 113 während des Einführens des Verbindungsstutzens entlang einer Einführrichtung 149 durch einen Kontakt mit dem Stutzenvorsprung 147 des Verbindungsstutzens 101 insbesondere radial nach außen verformbar, um ein Einführen des Verbindungsstutzens 101 in die Arretierungshülse 111 zu ermöglichen. Nach dem Einführen des Verbindungsstutzens 101 in die Arretierungshülse 111 schnappt das insbesondere federelastisch ausgebildete Arretierelement 113 radial nach innen ein, um den Verbindungsstutzen 101 innerhalb der Arretierungshülse 111 zu verriegeln.

In dem verriegelten Zustand des Fluidverbindungselements 100 ist das Arretierelement 113 innerhalb der weiteren Stutzenöffnung 127-2 des Aufnahmestutzens 103 angeordnet. Hierbei weist das Arretierelement 113 insbesondere jeweils einen Anschlag 151 auf, welcher ausgebildet ist, an einem Anschlagrand 153 der weiteren Stutzenöffnung 127-2 anzuliegen, um eine Verschiebung der axial verschiebbaren Arretierungshülse 111, insbesondere eine Verschiebung entgegen der Einführrichtung 149, zu begrenzen.

Hierbei verhindert der Kontakt zwischen dem Anschlag 151 des Arretierelements 113 und dem Anschlagrand 153 der weiteren Stutzenöffnung 127-2 bei einer entgegen der Einführrichtung 149 gerichteten Verschiebung eine radiale nach außen gerichtete Verformung des Arretierelements 113, so dass der Stutzenvorsprung 147 des Verbindungsstutzens 101 weiterhin wirksam durch das Arretierelement 149 verriegelt wird.

Ist der Verbindungsstutzen 101 durch das Arretierelement 113 arretiert, stellt die axial verschiebbare Arretierungshülse 111 eine wirksame Verriegelung des Verbindungsstutzens 101 sicher.

Wird die Arretierungshülse 111 hingegen durch das Betätigungselement 125, insbesondere den radial verformbaren Arm 125-1, festgesetzt, kann die Arretierungshülse 111 nicht mehr axial, insbesondere nicht mehr axial nach vorne, verschoben werden. Wie schon beschrieben worden ist, geschieht das Festsetzen der Arretierungshülse 111 durch einen Kontakt des Profils 131 des radial verformbaren Arms 125-1 mit dem Gegenprofil 133 der Arretierungshülse 111.

Ist die Arretierungshülse 111 durch das Betätigungselement 125 festgesetzt, kann die Arretierungshülse 111 nicht mehr entgegen der Einführrichtung 149 verschoben werden und der Anschlag 151 des Arretierelements 113 der festgesetzten Arretierungshülse 111 liegt nicht am Anschlagrand 153 der weiteren Stutzenöffnung 127-2 an, so dass das Arretierelement 113 frei verformbar ist und bei einer Herausziehbewegung radial nach außen verformt wird, und dadurch den Stutzenvorsprung 147 des Verbindungsstutzens 101 freigibt.

Somit resultiert eine Betätigung des Betätigungselements 125, insbesondere des radial verformbaren Arms 125-1, in einer Festsetzung der Arretierungshülse 111, wodurch das Arretierelement 113 radial nicht festgelegt ist und radial nach außen ausfedern kann, um den Stutzenvorsprung 147 des Verbindungsstutzens 101 freizugeben, wodurch der Verbindungsstutzen 101 aus dem Aufnahmestutzen 103 des Fluidverbindungselements 100 herausgezogen werden kann.

Fig. 2A zeigt eine Schnittdarstellung des Fluidverbindungselements gemäß der ersten Ausführungsform in einer Sicherungsstellung. Fig. 2B zeigt eine Schnittdarstellung des Fluidverbindungselements gemäß der ersten Ausführungsform in einer Lösestellung.

In den in den Figuren 2A und 2B gezeigten Darstellungen ist eine Arretierungshülse 111 in einem Aufnahmestutzen 103 eines Fluidverbindungselements 100 angeordnet, wobei ein Verbindungsstutzen 101 in der Arretierungshülse 111 aufgenommen ist.

Der Aufnahmestutzen 103 weist einen radial verlagerbaren Arm 125-1 als Betätigungselement 125, auf, welcher ausgebildet ist, die Arretierungshülse 111 für das Lösen der Arretierung des Verbindungsstutzens 101 festzusetzen.

Eine rotierbare Außenhülse 135 umschließt den Aufnahmestutzen 103, wobei die rotierbare Außenhülse 135 zwischen einer in Fig. 2A dargestellten Sicherungsstellung der Außenhülse 135 und einer in Fig. 2B dargestellten Lösestellung der Außenhülse 135 rotierbar ist.

In der in Fig. 2A dargestellten Sicherungsstellung der Außenhülse 135 deckt eine Abdeckung 137 der Außenhülse 135 den radial verlagerbaren Arm 125-1, insbesondere einen Druckknopf 129 des Arms 125-1, ab. Somit kann der radial verlagerbaren Arm 125-1 nicht radial nach innen verlagert werden, so dass die Arretierungshülse 111 in der Sicherungsstellung axial verschiebbar ist.

In der Sicherungsstellung arretiert somit das zumindest eine Arretierelement 113 der Arretierungshülse 111 weiterhin den Verbindungsstutzen 101, da das Arretierelement 113 nicht radial nach außen verformt werden kann, wie in Bezug auf die Fig. 1 im Detail ausgeführt worden ist.

Durch ein Rotieren der rotierbaren Außenhülse 135 wird die Außenhülse 135 von der in Fig. 2A dargestellten Sicherungsstellung in die in Fig. 2B dargestellte Lösestellung der Außenhülse 135 überführt. In der Lösestellung der Außenhülse 135 sind die Betätigungsöffnung 139 und der radial verlagere Arm 125-1, insbesondere die Drucktaste 129, fluchtend zueinander angeordnet, so dass der radial verlagerbare Arm 125-1, insbesondere durch Betätigung der Drucktaste 129, radial nach innen verlagert werden kann.

Durch das radiale nach innen Verlagern des radial verlagerbaren Arms 125-1 wird die Arretierungshülse 111 festgesetzt. Hierbei greift ein Profil 131 des radial verlagerbaren Arms 125-1, insbesondere ein Vorsprung, in ein Gegenprofil 133, insbesondere eine Ausnehmung, der Arretierungshülse 111, insbesondere eines Halterungssteges 121 der Arretierungshülse 111, ein, um die Arretierungshülse 111 für das Lösen der Arretierung des Verbindungsstutzens 101 festzusetzen.

Durch das Festsetzen der Arretierungshülse 111 kann die Arretierungshülse 111 nicht mehr axial verschoben werden und bei einer Herausziehbewegung des Verbindungsstutzens 101 entgegen der Einführrichtung 149 kann das zumindest eine Arretierelement 113 radial nach außen verlagert werden, um den Verbindungsstutzens 101 freizugeben, wie in Bezug auf die Fig. 1 im Detail ausgeführt worden ist.

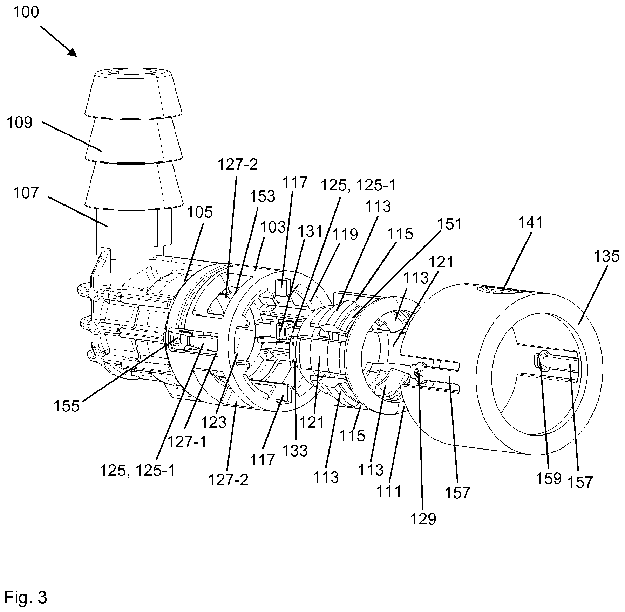

Wie in den Figuren 1, 2A und 2B, als auch in den Figuren 3 bis 10C, dargestellt, weist die Arretierungshülse 111 insbesondere eine Mehrzahl von, insbesondere vier, Arretierungselemente 113 auf, weist der Aufnahmestutzen 103 insbesondere eine Mehrzahl von, insbesondere zwei, Betätigungselemente 125, insbesondere radial verlagerbare Arme 125-1, auf, weist die rotierbare Außenhülse 135 insbesondere eine Mehrzahl von, insbesondere zwei, Betätigungsöffnungen 139 auf, und/oder weist die Arretierungshülse 111 insbesondere eine Mehrzahl von, insbesondere zwei, Halterungsstege 121 auf. Insbesondere sind jeweils zwei der vier Arretierungselemente 113 in der Arretierungshülse 111 einander gegenüberliegend angeordnet. Insbesondere sind die beiden Halterungsstege 121 in der Arretierungshülse 111 einander gegenüberliegend angeordnet. Insbesondere sind die beiden Betätigungselemente 125, insbesondere radial verlagerbare Arme 125-1, in dem Aufnahmestutzen 103 einander gegenüberliegend angeordnet. Insbesondere sind die beiden Betätigungsöffnungen 139 in der rotierbaren Außenhülse 135 einander gegenüber liegend angeordnet.

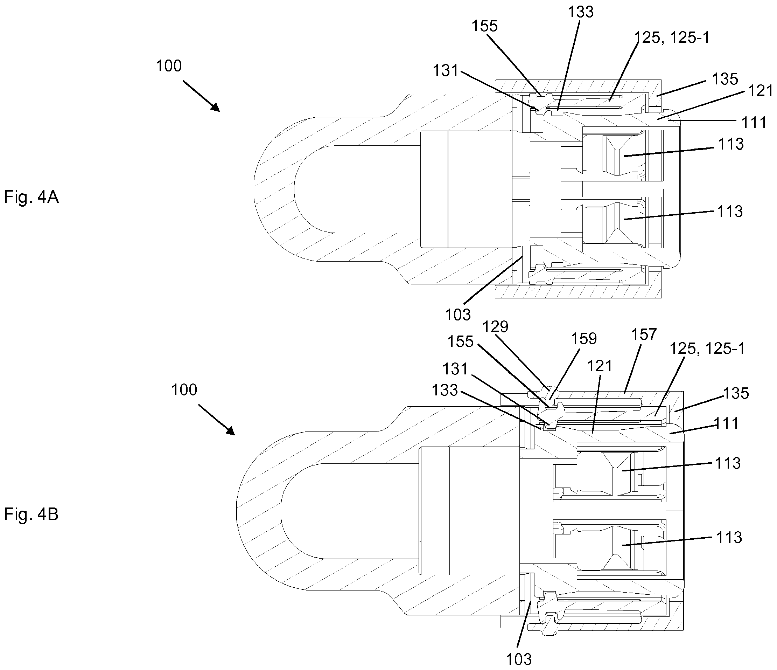

Fig. 3 zeigt eine Explosionsdarstellung eines Fluidverbindungselements gemäß einer zweiten Ausführungsform. Die Fig. 4A zeigt eine Schnittdarstellung des Fluidverbindungselements gemäß der zweiten Ausführungsform in einer Sicherungsstellung. Die Fig. 4B zeigt eine Schnittdarstellung des Fluidverbindungselements gemäß der zweiten Ausführungsform in einer Lösestellung.

Das Fluidverbindungselement 100 zum Herstellen einer Fluidverbindung mittels eines Verbindungsstutzens 101 gemäß der zweiten Ausführungsform umfasst eine Arretierungshülse 111, welche in einem Aufnahmestutzen 103 des Fluidverbindungselements 100 axial verschiebbar angeordnet und ausgebildet ist, den Verbindungsstutzen 101 aufzunehmen. Die Arretierungshülse 111 weist ein Arretierelement 113 auf, welches ausgebildet ist, den in der Arretierungshülse 111 aufgenommenen Verbindungsstutzen 101 zu arretieren. Für Details hinsichtlich des Arretierungsmechanismus wird auf die detaillierten Ausführungen hierzu in Bezug auf die erste Ausführungsform gemäß den Figuren 1, 2A und 2B verwiesen.

Das Betätigungselement 125 ist in der zweiten Ausführungsform ebenso wie in der ersten Ausführungsform als ein radial verlagerbarer Arm 125-1 des Aufnahmestutzens 103 ausgebildet. Ebenso wie in der ersten Ausführungsform weist auch der radial verlagerbare Arm 125-1 gemäß der zweiten Ausführungsform ein Profil 131, insbesondere einen Vorsprung, auf, welches in ein Gegenprofil 133, insbesondere eine Ausnehmung, der Arretierungshülse 111, insbesondere eines Halterungssteges 121 der Arretierungshülse 111 eingreift, um die Arretierungshülse 111 für das Lösen der Arretierung des Verbindungsstutzens 101 festzusetzen.

Der radial verlagerbare Arm 125-1 gemäß der zweiten Ausführungsform unterscheidet sich jedoch von dem radial verlagerbaren Arm 125-1 gemäß der ersten Ausführungsform dadurch, dass der radial verlagerbare Arm 125-1 gemäß der zweiten Ausführungsform keinen durch einen Nutzer betätigbaren Druckknopf 129 aufweist, um den radial verlegerbaren Arm 125-1 nach innen zu verlagern, sondern stattdessen ein weiteres Gegenprofil 155, insbesondere eine weitere Ausnehmung, aufweist.

Das Fluidverbindungselement 100 weist ferner eine rotierbare Außenhülse 135 auf, welche den Aufnahmestutzen 103 rotierbar umschließt, und welche zwischen einer in Fig. 4A dargestellten Sicherungsstellung zum Unterbinden des Lösens der Arretierung des Verbindungsstutzens 101 und einer in Fig. 4B dargestellten Lösestellung zum Lösen der Arretierung des Verbindungsstutzens 101 rotierbar ist.

Wie in der Fig. 4A dargestellt ist, deckt die rotierbare Außenhülse 135 in der Sicherungsstellung den radial verlagerbaren Arm 125-1 ab, so dass eine nach innen gerichtete radiale Verlagerung des radial verlagerbaren Arms 125-1 nicht möglich ist, um das Lösen der Arretierung des Verbindungsstutzens 101 zu unterbinden.

Im Gegensatz zu der in den Figuren 1, 2A und 2B dargestellten ersten Ausführungsform weist die rotierbare Außenhülse 135 gemäß der zweiten Ausführungsform zumindest einen weiteren radial verlagerbaren Arm 157, insbesondere zwei weitere radial verlagerbare Arme 157 auf, welcher wie in der Fig. 4B dargestellt ist, in der Lösestellung der rotierbaren Außenhülse 135 fluchtend zu dem radial verlagerbaren Arm 125-1 des Aufnahmestutzens 103 angeordnet ist.

In der Lösestellung der rotierbaren Außenhülse 135 ist der weitere radial verlagerbare Arm 157 der Außenhülse 135 ausgebildet, das Betätigungselement 125, insbesondere den radial verlagerbaren Arm 125-1, des Aufnahmestutzens 103 radial nach innen zu verlagern, um die Arretierungshülse 111 für das Lösen der Arretierung des Verbindungsstutzens 101 festzusetzen. Hierzu weist der weitere radiale Arm 157 ein weiteres Profil 159, insbesondere einen weiteren Vorsprung, auf, welcher in das weitere Gegenprofil 155, insbesondere in die weitere Ausnehmung, des radial verlagerbaren Arms 125-1 des Aufnahmestutzens 103 eingreift.

Der weitere radiale Arm 157 der Außenhülse 135 weist ferner einen Druckknopf 129 auf, welcher durch den Nutzer betätigbar ist, um den weiteren radialen Arm 157 nach innen zu verlagern und um den radialen Arm 125-1 des Aufnahmestutzens 103 nach innen zu verlagern und die Arretierungshülse 111 für das Lösen der Arretierung festzusetzen.

Insbesondere sind die beiden weiteren radialen Arme 157 in der rotierbaren Außenhülse 135 einander gegenüber liegend angeordnet.

Für weitere Details der zweiten Ausführungsform gemäß den Figuren 3, 4A und 4B wird auf die Ausführungen zu der ersten Ausführungsform gemäß den Figuren 1, 2A und 2B verwiesen.

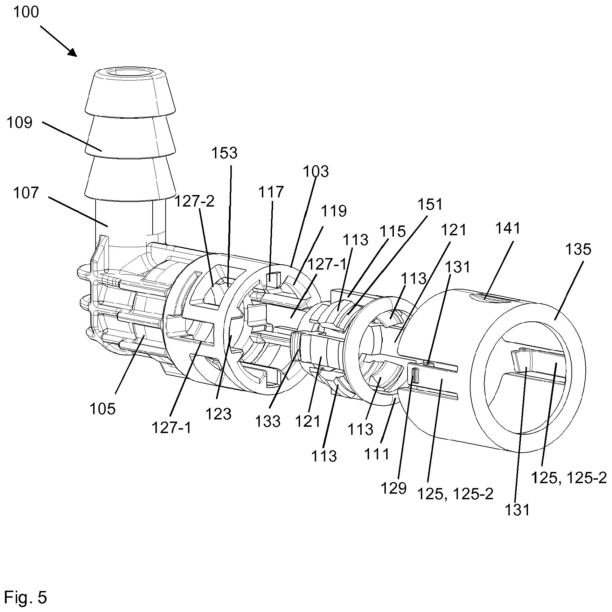

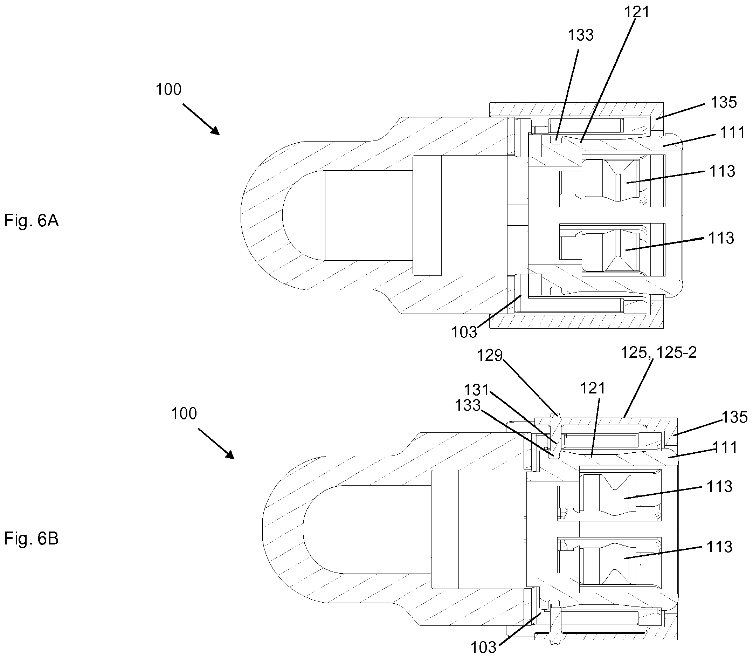

Fig. 5 zeigt eine Explosionsdarstellung eines Fluidverbindungselements gemäß einer dritten Ausführungsform. Fig. 6A zeigt eine Schnittdarstellung des Fluidverbindungselements gemäß der dritten Ausführungsform in einer Sicherungsstellung. Fig. 6B zeigt eine Schnittdarstellung des Fluidverbindungselements gemäß der dritten Ausführungsform in einer Lösestellung.

Das Fluidverbindungselement 100 gemäß der dritten Ausführungsform umfasst eine Arretierungshülse 111, welche in einem Aufnahmestutzen 103 des Fluidverbindungselements 100 axial verschiebbar angeordnet und ausgebildet ist, einen Verbindungsstutzen 101 aufzunehmen. Die Arretierungshülse 111 weist ein Arretierelement 113 auf, welches ausgebildet ist, den in der Arretierungshülse 111 aufgenommenen Verbindungsstutzen 101 zu arretieren. Für Details hinsichtlich des Arretierungsmechanismus wird auf die detaillierten Ausführungen hierzu in Bezug auf die erste Ausführungsform gemäß den Figuren 1, 2A und 2B verwiesen.

Das Betätigungselement 125 in der dritten Ausführungsform ist im Gegensatz zu den Betätigungselementen 125 gemäß der ersten und zweiten Ausführungsform nicht als ein radial verlagerbarer Arm 125-1 des Aufnahmestutzens 103 ausgebildet, sondern ist als ein radial verlagerbarer Arm 125-2 der rotierbaren Außenhülse 135 ausgebildet.

In der in Fig. 6B gezeigten Lösestellung der rotierbaren Außenhülse ist der radial verlagerbare Arm 125-2 der rotierbaren Außenhülse 135 hierbei ausgebildet, die Arretierungshülse 111 für das Lösen der Arretierung festzusetzen. Hierbei weist der radial verlagerbare Arm 125-2 gemäß der dritten Ausführungsform ein Profil 131, insbesondere einen Vorsprung, auf, welches in ein Gegenprofil 133, insbesondere eine Ausnehmung, der Arretierungshülse 111, insbesondere eines Halterungssteges 121 der Arretierungshülse 111 eingreift, um die Arretierungshülse 111 für das Lösen der Arretierung des Verbindungsstutzens 101 festzusetzen.

Somit weist der Aufnahmestutzen 103 gemäß der dritten Ausführungsform kein radial verlagerbares Element, sondern lediglich eine Stutzenöffnung 127-1 auf.

Um einen wirksamen Kontakt zwischen dem radial verlagerbaren Arm 125-2 der rotierbaren Außenhülse 135 und der Arretierungshülse 111 sicherzustellen, durchbricht der radial verlagerbare Arm 125-2 der rotierbaren Außenhülse 135, insbesondere das Profil 131 des radial verlagerbaren Arms 125-2, eine Stutzenöffnung 127-1 des Aufnahmestutzens 103, um in der Lösestellung der Außenhülse 135 die Arretierungshülse 111 für das Lösen der Arretierung festzusetzen, wie in der Fig. 6B gezeigt ist.

In der in Fig. 6B gezeigten Lösestellung der Außenhülse 135 wird der radial verlagerbare Arm 125-2 der Außenhülse 135 somit durch Betätigung eines Druckknopfes 129 des radial verlagerbaren Arms 125-2 durch den Nutzer radial nach innen verlagert und setzt die Arretierungshülse 111 für das Lösen der Arretierung des Verbindungsstutzens 101 fest.

In der in Fig. 6A zeigten Sicherungsstellung der rotierbaren Außenhülse 135 hingegen ist der rotierbare Arm 125-2 der Außenhülse 135 nicht fluchtend zu der Arretierungshülse 111, insbesondere nicht fluchtend zu dem Halterungssteg 121 der Arretierungshülse 111, angeordnet, so dass der rotierbare Arm 125-2 der Außenhülse 135 bei einer radialen Verformung nach innen, die Arretierungshülse 111 nicht festsetzen kann.

Für weitere Details der dritten Ausführungsform gemäß den Figuren 5, 6A und 6B wird auf die Ausführungen zu der ersten Ausführungsform gemäß den Figuren 1, 2A und 2B verwiesen.

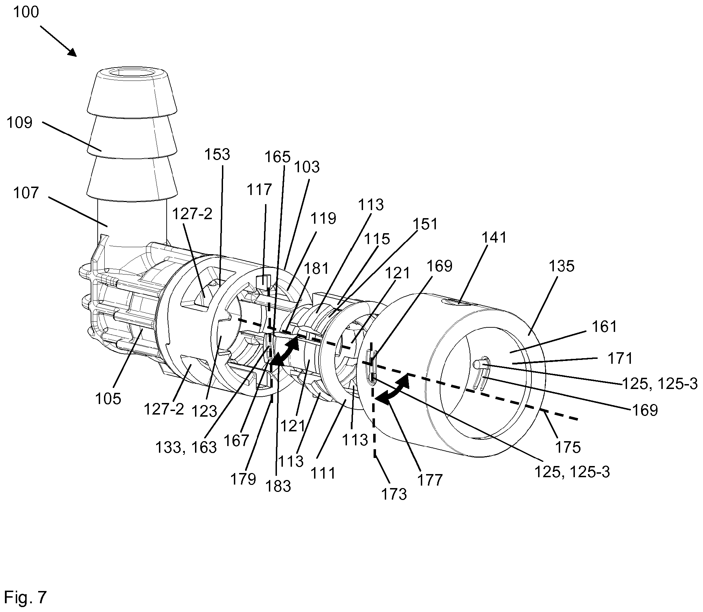

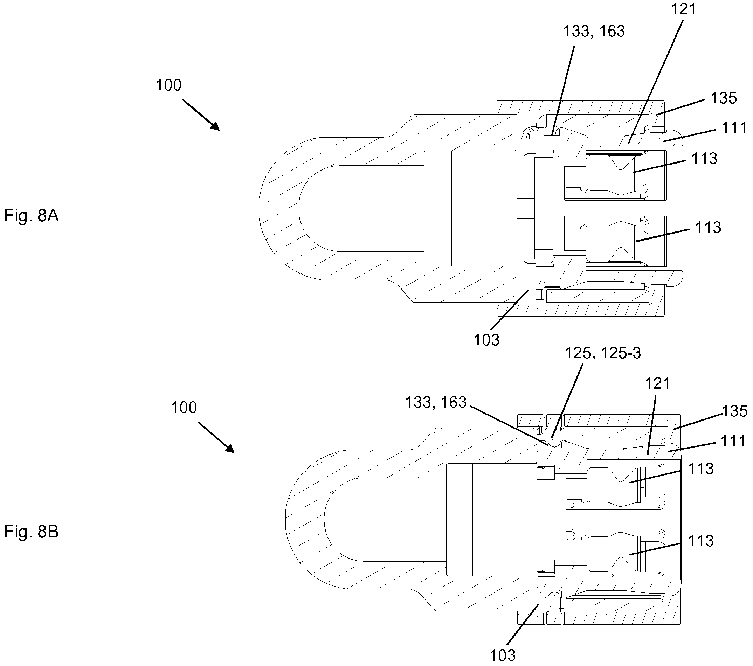

Fig. 7 zeigt eine Explosionsdarstellung eines Fluidverbindungselements gemäß einer vierten Ausführungsform. Fig. 8A zeigt eine Schnittdarstellung des Fluidverbindungselements gemäß der vierten Ausführungsform in einer Sicherungsstellung. Fig. 8B zeigt eine Schnittdarstellung des Fluidverbindungselements gemäß der vierten Ausführungsform in einer Lösestellung.

Das Fluidverbindungselement 100 gemäß der vierten Ausführungsform umfasst eine Arretierungshülse 111, welche in einen Aufnahmestutzen 103 des Fluidverbindungselements 100 axial verschiebbar angeordnet und ausgebildet ist, einen Verbindungsstutzen 101 aufzunehmen. Die Arretierungshülse 111 weist ein Arretierelement 113 auf, welches ausgebildet ist, den in der Arretierungshülse 111 aufgenommenen Verbindungsstutzen 101 zu arretieren. Für Details hinsichtlich des Arretierungsmechanismus wird auf die detaillierten Ausführungen hierzu in Bezug auf die erste Ausführungsform gemäß den Figuren 1, 2A und 2B verwiesen.

Das Betätigungselement 125 ist in der vierten Ausführungsform im Gegensatz zu den Betätigungselementen 125 gemäß der ersten, zweiten und dritten Ausführungsform als ein an einer Hülseninnenseite 161 der rotierbaren Außenhülse 135 angeordneter Hülsenvorsprung 125-3 ausgebildet ist.

In der in Fig. 8B dargestellten Lösestellung der Außenhülse 135 greift der Hülsenvorsprung 125-3 in ein Gegenprofil 133, insbesondere eine Ausnehmung, der Arretierungshülse 111, insbesondere eines Halterungssteges 121 der Arretierungshülse 111, ein, um die Arretierungshülse 111 für das Lösen der Arretierung des Verbindungsstutzens 101 festzusetzen.

Das Gegenprofil 133 der Arretierungshülse 111, insbesondere des Halterungssteges 121 der Arretierungshülse 111, ist insbesondere als eine Führungsnut 163 ausgebildet, in welche der Hülsenvorsprung 125-3 eingreift. Insbesondere ist der Hülsenvorsprung 125-3 durch eine Rotation der rotierbaren Außenhülse 135 von der Sicherungsstellung in die Lösestellung der Außenhülse 135 in die Führungsnut 163 einführbar, um in die Führungsnut 163 zum Festsetzen der Arretierungshülse 111 einzugreifen.

Die Führungsnut 163 weist insbesondere eine Nutöffnung 165 auf, durch welche der Hülsenvorsprung 125-3 in die Führungsnut 163 einführbar ist, und die Führungsnut 163 weist einen Nutanschlag 167 auf, an welcher der in die Führungsnut 163 eingeführte Hülsenvorsprung 125-3 anlegbar ist, um eine Bewegung des Hülsenvorsprungs 125-3 in der Führungsnut 163 zu begrenzen.

Wie in der Fig. 7 ferner dargestellt ist, ist der Hülsenvorsprung 125-3 durch einen Vorsprungssteg 169 mit einem Hülsengehäuse 171 der rotierbaren Außenhülse 135 verbunden.

In der in den Figuren 7, 8A und 8B gezeigten vierten Ausführungsform weist der Vorsprungssteg 169 eine Stegerstreckungsrichtung 173 auf, welche gegenüber einer Längsachse 175 der Außenhülse 135 nicht orthogonal angeordnet ist. Somit beträgt der Stegwinkel 177 zwischen der Stegerstreckungsrichtung 173 und einer Längsachse 175 der Außenhülse zwischen 1° und 89°, insbesondere zwischen 20° und 60°.

In der in den Figuren 7, 8A und 8B gezeigten vierten Ausführungsform weist die Führungsnut 163 eine Nuterstreckungsrichtung 179 auf, welche gegenüber einer Längsachse 181 der Arretierungshülse 111 nicht orthogonal angeordnet ist. Somit beträgt der Nutwinkel 183 zwischen der Nuterstreckungsrichtung 179 und einer Längsachse 181 der Arretierungshülse 111 zwischen 1° und 89°, insbesondere zwischen 20° und 60°.

Durch die geneigte Anordnung der Führungsnut 163 wird beim Rotieren der rotierbaren Außenhülse 135 von der Sicherungsstellung in die Lösestellung der Außenhülse 135 der Hülsenvorsprung 125-3 entlang der geneigten Wandung der Führungsnut 163 derart geführt, dass durch die Rotationsbewegungskomponente der Außenhülse 135 noch eine Translationsbewegungskomponente der Arretierungshülse 111 auftritt, durch welche die Arretierungshülse 111 entlang der Längsachse 175 der Außenhülse 135, bzw. entlang der Längsachse 181 der Arretierungshülse 111, auf den Aufnahmestutzen 103, insbesondere gegen einen hinteren Anschlag des Aufnahmestutzens 103, geschraubt wird.

Somit kann durch eine Rotation der rotierbaren Außenhülse 135 von der in Fig. 8A dargestellten Sicherungsstellung in die in Fig. 8B dargestellte Lösestellung der Außenhülse 135 durch den Eingriff des Hülsenvorsprungs 125-3 in das Gegenprofil 133 der Arretierungshülse 111 die Arretierungshülse 111 wirksam festgesetzt werden.

In der in Fig. 8A dargestellten Sicherungsstellung der Außenhülse 135 greift der Hülsenvorsprung 125-3 nicht in das Gegenprofil 133, insbesondere Führungsnut 163 der Arretierungshülse 111 ein und dadurch setzt der Hülsenvorsprung 125-3 die Arretierungshülse 111 nicht fest, so dass die Arretierungshülse 111 weiterhin axial in dem Aufnahmestutzen 103 verschiebbar ist.

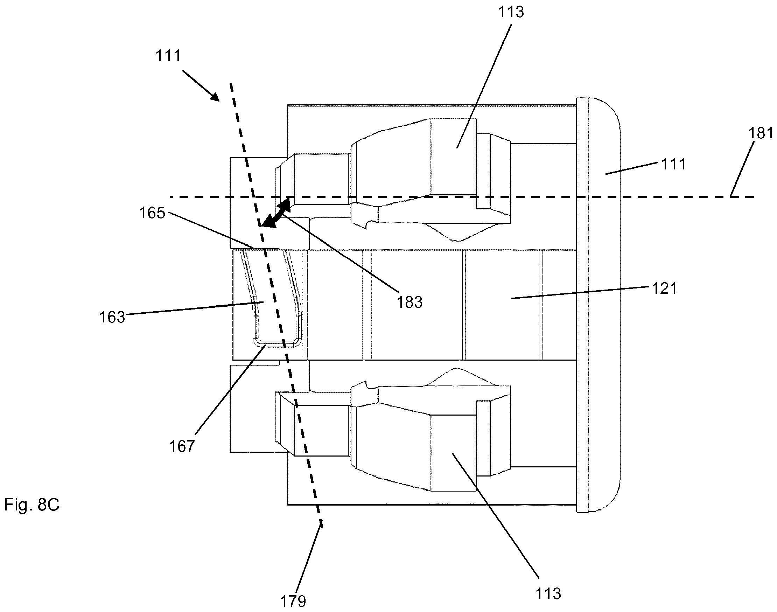

Die Fig. 8C zeigt eine Darstellung einer Arretierungshülse des Fluidverbindungselements gemäß der vierten Ausführungsform.

Wie in der Fig. 8C gezeigt ist, weist die in der Arretierungshülse 111, insbesondere in dem Halterungssteg 121 der Arretierungshülse 111, gebildete Führungsnut 163 eine Nuterstreckungsrichtung 179 auf, welche gegenüber einer Längsachse 181 der Arretierungshülse 111 nicht orthogonal angeordnet ist. Somit beträgt der Nutwinkel 183 zwischen der Nuterstreckungsrichtung 179 und einer Längsachse 181 der Arretierungshülse 111 zwischen 1° und 89°, insbesondere zwischen 20° und 60°.

Für weitere Details der vierten Ausführungsform gemäß den Figuren 7, 8A, 8B und 8C wird auf die Ausführungen zu der ersten Ausführungsform gemäß den Figuren 1, 2A und 2B verwiesen.

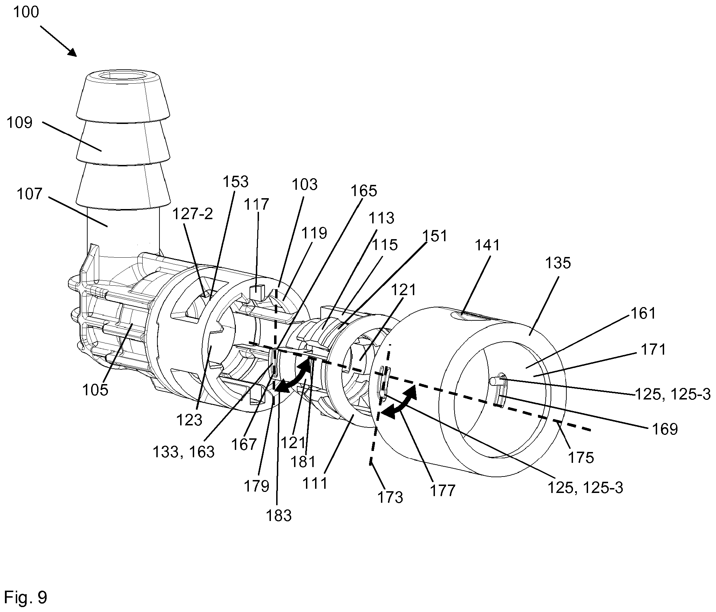

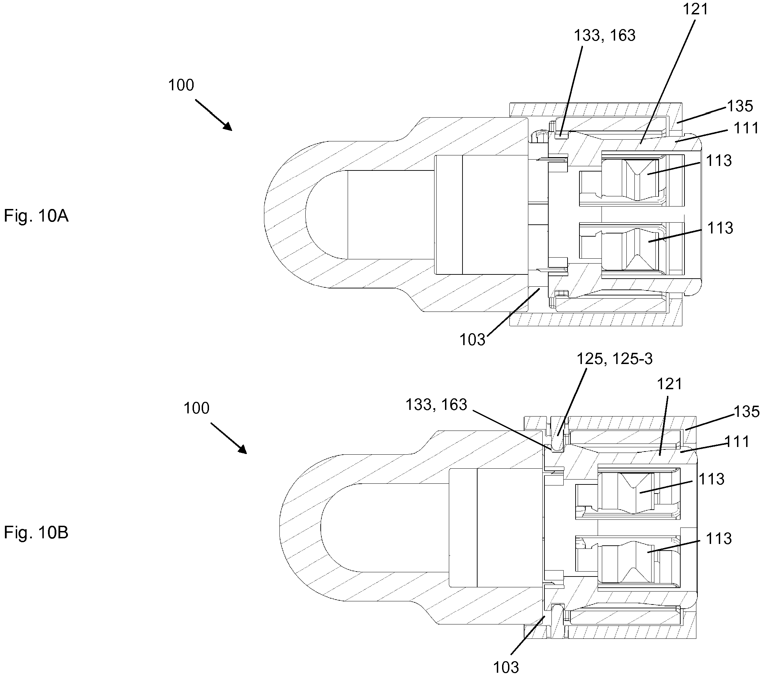

Fig. 9 zeigt eine Explosionsdarstellung eines Fluidverbindungselements gemäß einer fünften Ausführungsform. Fig. 10A zeigt eine Schnittdarstellung des Fluidverbindungselements gemäß der fünften Ausführungsform in einer Sicherungsstellung. Fig. 10B zeigt eine Schnittdarstellung des Fluidverbindungselements gemäß der fünften Ausführungsform in einer Lösestellung.

Das in den Figuren 9, 10A und 10B dargestellte Fluidverbindungselement 100 gemäß der fünften Ausführungsform entspricht dem in den Figuren 7, 8A und 8B dargestellten Fluidverbindungselement 100 gemäß der vierten Ausführungsform bis darauf, dass das Fluidverbindungselement 100 gemäß der fünften Ausführungsform eine Nuterstreckungsrichtung 179 aufweist, welche gegenüber einer Längsachse 181 der Arretierungshülse 111 orthogonal angeordnet ist, so dass der Nutwinkel 183 zwischen der Nuterstreckungsrichtung 179 und einer Längsachse 181 der Arretierungshülse 111 90° beträgt.

Zudem weist der in den Figuren 9, 10A und 10B der fünften Ausführungsform gezeigte Vorsprungssteg 169 eine Stegerstreckungsrichtung 173 auf, welche gegenüber einer Längsachse 175 der Außenhülse 135 orthogonal angeordnet ist. Somit beträgt der Stegwinkel 177 zwischen der Stegerstreckungsrichtung 173 und der Längsachse 175 der Außenhülse 90°.

Dadurch wird der technische Vorteil erreicht, dass der Hülsenvorsprung 125-3 durch eine Rotation der Außenhülse 135 wirksam in die Führungsnut 163 eingreifen kann, ohne dass eine Translationsbewegungskomponente der Arretierungshülse 111 auftritt.

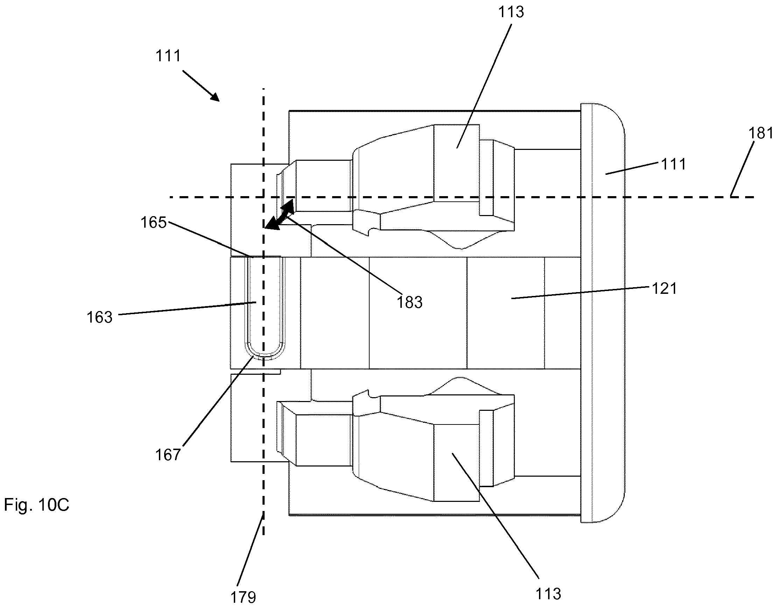

Die Fig. 10C zeigt eine Darstellung einer Arretierungshülse 111 des Fluidverbindungselements 100 gemäß der fünften Ausführungsform.

Wie in der Fig. 10C gezeigt ist, weist die in der Arretierungshülse 111, insbesondere in dem Halterungssteg 121 der Arretierungshülse 111, gebildete Führungsnut 163 eine Nuterstreckungsrichtung 179 auf, welche gegenüber einer Längsachse 181 der Arretierungshülse 111 orthogonal angeordnet ist. Somit beträgt der Nutwinkel 183 zwischen der Nuterstreckungsrichtung 179 und einer Längsachse 181 der Arretierungshülse 111 90°.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fluidverbindungselement
- 101: Verbindungsstutzen
- 103: Aufnahmestutzen
- 105: Leitungsabschnitt
- 107: Weiterer Leitungsabschnitt
- 109: Leitungsabschnittsvorsprünge
- 111: Arretierungshülse
- 113: Arretierelement
- 115: Längssteg
- 117: Aufnahmenut
- 119: Stutzeninnenseite des Aufnahmestutzens
- 121: Halterungssteg
- 123: Weitere Aufnahmenut
- 125: Betätigungselement
- 125-1: Radial verlagerbarer Arm des Aufnahmestutzens
- 125-2: Radial verlagerbarer Arm der Außenhülse
- 125-3: Hülsenvorsprung der Außenhülse
- 127-1: Stutzenöffnung des Aufnahmestutzens
- 127-2: Weitere Stutzenöffnung des Aufnahmestutzens
- 129: Drucktaste
- 131: Profil
- 133: Gegenprofil
- 135: Rotierbare Außenhülse
- 137: Abdeckung
- 139: Betätigungsöffnung
- 141: Greifelement
- 143-1: Erster Hülsenbereich
- 143-2: Zweiter Hülsenbereich
- 145: Außendurchmesser
- 145-1: Erster Außendurchmesser
- 145-2: Zweiter Außendurchmesser
- 147: Stutzenvorsprung des Verbindungsstutzens
- 149: Einführrichtung
- 151: Anschlag
- 153: Anschlagsrand der weiteren Stutzenöffnung
- 155: Weiteres Gegenprofil
- 157: Weiterer radial verlagerbarer Arm der Außenhülse
- 159: Weiteres Profil
- 161: Hülseninnenseite der rotierbaren Außenhülse
- 163: Führungsnut
- 165: Nutöffnung
- 167: Nutanschlag
- 169: Vorsprungssteg
- 171: Hülsengehäuse der Außenhülse
- 173: Stegerstreckungsrichtung
- 175: Längsachse der Außenhülse
- 177: Stegwinkel
- 179: Nuterstreckungsrichtung
- 181: Längsachse der Arretierungshülse
- 183: Nutwinkel
- 200: Fluidverbindungsanordnung

## Patentansprüche

1. Fluidverbindungselement (100) zum Herstellen einer Fluidverbindung mittels eines Verbindungsstutzens (101), mit:
einem Aufnahmestutzen (103) zum Aufnehmen des Verbindungsstutzens (101);
einer Arretierungshülse (111), welche in dem Aufnahmestutzen (103) axial verschiebbar angeordnet und ausgebildet ist, den Verbindungsstutzen (101) aufzunehmen, wobei die Arretierungshülse (111) ein Arretierelement (113) aufweist, welches ausgebildet ist, den in der Arretierungshülse (111) aufgenommenen Verbindungsstutzen (101) zu arretieren; und
einem Betätigungselement (125, 125-1, 125-2, 125-3), das ausgebildet ist, die Arretierungshülse (111) für das Lösen der Arretierung festzusetzen, sodass der Verbindungsstutzen (101) aus der Arretierungshülse (111) herausführbar ist;
**dadurch gekennzeichnet, dass** das Fluidverbindungselement (100) weiter eine rotierbare Außenhülse (135) aufweist, welche den Aufnahmestutzen (103) rotierbar umschließt, wobei die rotierbare Außenhülse eine Lösestellung aufweist, welche das Betätigen des Betätigungselementes (125, 125-1, 125-2, 125-3) zum Lösen der Arretierung erlaubt, und eine Sicherungsstellung aufweist, welche das Betätigen des Betätigungselementes (125, 125-1, 125-2, 125-3) zum Lösen der Arretierung unterbindet,
wobei die rotierbare Außenhülse (135) zwischen der Lösestellung und der Sicherungsstellung rotierbar ist.

2. Fluidverbindungselement (100) nach Anspruch 1, wobei das Betätigungselement (125, 125-1, 125-2, 125-3) als ein radial verlagerbarer Arm (125-1) des Aufnahmestutzens (103) ausgebildet ist, wobei die rotierbare Außenhülse (135) in der Sicherungsstellung den radial verlagerbaren Arm (125-1) abdeckt, um das Lösen der Arretierung durch den radial verlagerbaren Arm (125-1) zu unterbinden, wobei die rotierbare Außenhülse (135) eine Betätigungsöffnung (139) aufweist, und wobei in der Lösestellung der rotierbaren Außenhülse (135) die Betätigungsöffnung (139) und der radial verlagerbare Arm (125-1) fluchtend zueinander angeordnet sind, und wobei in der Lösestellung der rotierbaren Außenhülse (135) der radial verlagerbare Arm (125-1) des Aufnahmestutzens (103) radial nach innen verlagerbar ist, um die Arretierungshülse (111) für das Lösen der Arretierung festzusetzen.

3. Fluidverbindungselement (100) nach Anspruch 1, wobei das Betätigungselement (125, 125-1, 125-2, 125-3) als ein radial verlagerbaren Arm (125-1) des Aufnahmestutzens (103) ausgebildet ist, wobei die rotierbare Außenhülse (135) in der Sicherungsstellung den radial verlagerbaren Arm (125-1) abdeckt, um das Lösen der Arretierung durch den radial verlagerbaren Arm (125-1) zu unterbinden, wobei die rotierbare Außenhülse (135) einen weiteren radial verlagerbaren Arm (157) aufweist, welcher ausgebildet ist, den radial verlagerbaren Arm (125-1) zum Festsetzen der Arretierungshülse (111) zu betätigen, wobei in der Lösestellung der rotierbaren Außenhülse (135) der weitere radial verlagerbare Arm (157) und der radial verlagerbare Arm (125-1) fluchtend zueinander angeordnet sind, und wobei in der Lösestellung der rotierbaren Außenhülse (135) der weitere radial verlagerbare Arm (157) der Außenhülse (135) ausgebildet ist, den radial verlagerbaren Arm (125-1) des Aufnahmestutzens (103) radial nach innen zu verlagern, um die Arretierungshülse (111) für das Lösen der Arretierung festzusetzen.

4. Fluidverbindungselement (100) nach Anspruch 1, wobei das Betätigungselement (125, 125-1, 125-2, 125-3) als ein radial verlagerbarer Arm (125-2) der rotierbaren Außenhülse (135) ausgebildet ist, wobei in der Sicherungsstellung der rotierbaren Außenhülse (135) der radial verlagerbare Arm (125-2) der Außenhülse (135) zu der Arretierungshülse (111), insbesondere zu einem Halterungssteg (121) der Arretierungshülse (111) nicht fluchtend angeordnet ist, um das Lösen der Arretierung durch den radial verlagerbaren Arm (125-2) zu unterbinden, und wobei in der Lösestellung der rotierbaren Außenhülse (135) der radial verlagerbare Arm (125-2) der rotierbaren Außenhülse (135) zu der Arretierungshülse (111), insbesondere zu dem Halterungssteg (121) der Arretierungshülse (111), fluchtend angeordnet ist und der radial verlagerbare Arm (125-2) der rotierbaren Außenhülse (135) radial nach innen verlagerbar ist, um die Arretierungshülse (111) für das Lösen der Arretierung festzusetzen.

5. Fluidverbindungselement (100) nach Anspruch 1, wobei das Betätigungselement (125, 125-1, 125-2, 125-3) als ein an einer Hülseninnenseite (161) der rotierbaren Außenhülse (135) angeordneter Hülsenvorsprung (125-3) ausgebildet ist, wobei die Arretierungshülse (111), insbesondere ein Halterungssteg (121) der Arretierungshülse (111), ein Gegenprofil (133), insbesondere eine Ausnehmung, aufweist, wobei in der Lösestellung der rotierbaren Außenhülse (135) der Hülsenvorsprung (125-3) der rotierbaren Außenhülse (135) in das Gegenprofil (133), insbesondere Ausnehmung, eingreift, um die Arretierungshülse (111) für das Lösen der Arretierung festzusetzen, und wobei in der Sicherungsstellung der rotierbaren Außenhülse (135) der Hülsenvorsprung (125-3) der rotierbaren Außenhülse (135) nicht in das Gegenprofil (133) der Arretierungshülse (111) eingreift, um das Lösen der Arretierung zu unterbinden.

6. Fluidverbindungselement (100) nach Anspruch 5, wobei das Gegenprofil (133) als eine Führungsnut (163) der Arretierungshülse (111), insbesondere des Halterungssteges (121) der Arretierungshülse (111) ausgebildet ist, wobei der Hülsenvorsprung (125-3) der rotierbaren Außenhülse (135) durch eine Rotation der rotierbaren Außenhülse (135) von der Sicherungsstellung in die Lösestellung der Außenhülse (135) in die Führungsnut (163) einführbar ist.

7. Fluidverbindungselement (100) nach Anspruch 5 oder 6, wobei die Führungsnut (163) eine Nuterstreckungsrichtung (179) aufweist, welche gegenüber einer Längsachse (181) der Arretierungshülse (111) nicht orthogonal angeordnet ist, oder welche gegenüber einer Längsachse (181) der Arretierungshülse (111) orthogonal angeordnet ist.

8. Fluidverbindungselement (100) nach einem der vorangehenden Ansprüche, wobei der Aufnahmestutzen (103) eine Stutzenöffnung (127-1) aufweist, wobei das Betätigungselement (125, 125-1, 125-2, 125-3) die Stutzenöffnung (127-1) durchbricht, um in der Lösestellung der rotierbaren Außenhülse (135) die Arretierungshülse (111) für das Lösen der Arretierung festzusetzen.

9. Fluidverbindungselement (100) nach einem der vorangehenden Ansprüche, wobei das Betätigungselement (125, 125-1, 125-2, 125-3) ein Profil (131), insbesondere einen Vorsprung oder eine Ausnehmung, aufweist, welches in der Lösestellung der Außenhülse (135) in ein Gegenprofil (133), insbesondere eine Ausnehmung oder einen Vorsprung, der Arretierungshülse (111), insbesondere eines Halterungsstegs (121) der Arretierungshülse (111) eingreift, um die Arretierungshülse (111) für das Lösen der Arretierung festzusetzen.

10. Fluidverbindungselement (100) nach einem der vorangehenden Ansprüche, wobei das Arretierelement (113) während eines Einführens des Verbindungsstutzens (101) entlang einer Einführrichtung (149) durch einen Kontakt mit dem Verbindungsstutzen (101), insbesondere mit einem Stutzenvorsprung (147) des Verbindungsstutzens (101), radial nach außen verformbar ist, um ein Einführen des Verbindungsstutzens (101) in die Arretierungshülse (111) zu ermöglichen, wobei das Arretierelement (113) insbesondere als ein federelastisches Arretierelement (113) geformt ist, welches ausgebildet ist, nach dem Einführen des Verbindungsstutzens (101) in die Arretierungshülse (111) radial nach innen einzuschnappen, um den Verbindungsstutzen (101) in der Arretierungshülse (111) zu verriegeln.

11. Fluidverbindungselement (100) nach einem der vorangehenden Ansprüche, wobei der Aufnahmestutzen (103) eine weitere Stutzenöffnung (127-2) aufweist, wobei das Arretierelement (113) einen Anschlag (151) aufweist, welcher ausgebildet ist, an einem Anschlagsrand (153) der weiteren Stutzenöffnung (127-2) anzuliegen, um in der Sicherungsstellung der Außenhülse (135) eine Verschiebung der axial verschiebbaren Arretierungshülse (111) zu begrenzen.

12. Fluidverbindungselement (100) nach Anspruch 11, wobei in der Sicherungsstellung der Außenhülse (135) das Arretierelement (113) der axial verschiebbaren Arretierungshülse (111) während eines Herausführens des Verbindungsstutzens (101) entgegensetzt zu einer Einführrichtung (149) durch das Anliegen des Anschlags (151) an dem Anschlagrand (153) nicht radial nach außen verformbar ist, um ein Lösen der Arretierung des Verbindungsstutzens (101) zu unterbinden.

13. Fluidverbindungselement (100) nach einem der vorangehenden Ansprüche, wobei die durch das Betätigungselement (125, 125-1, 125-2, 125-3) festgesetzte Arretierungshülse (111) axial nicht verschiebbar ist, wobei das Arretierelement (113) der festgesetzten Arretierungshülse (111) während eines Herausführens des Verbindungsstutzens (101) aus der Arretierungshülse (111) radial nach außen verformbar ist, um den Verbindungsstutzen (101) freizugeben und die Arretierung des Verbindungsstutzens (101) zu lösen.

14. Fluidverbindungselement (100) nach einem der vorangehenden Ansprüche, wobei die rotierbare Außenhülse (135) einen konstanten Außendurchmesser (145) aufweist, oder wobei die rotierbare Außenhülse (135) einen ersten Hülsenbereich (143-1) und einen zweiten Hülsenbereich (143-2) aufweist, wobei der erste Hülsenbereich (143-1) einen ersten Außendurchmesser (145-1) aufweist, wobei der zweite Hülsenbereich (143-2) einen zweiten Außendurchmesser (145-2) aufweist, und wobei der zweite Außendurchmesser (145-2) geringer als der erste Außendurchmesser (145-1) ist.

15. Fluidverbindungselement (100) nach einem der vorangehenden Ansprüche, wobei an der rotierbaren Außenhülse (135) zumindest ein Greifelement (141) zum Rotieren der rotierbaren Außenhülse (135) angeordnet ist, wobei das Greifelement (141) insbesondere als ein Greifvorsprung ausgebildet ist.

16. Fluidverbindungselement (100) nach einem der vorangehenden Ansprüche, wobei an einer Stutzeninnenseite (119) des Aufnahmestutzens (103) zumindest eine Aufnahmenut (117) angeordnet ist, wobei die Arretierungshülse (111) zumindest einen Längssteg (115) aufweist, welcher in die jeweilige Aufnahmenut (117) einführbar ist, um eine Drehung der Arretierungshülse (111) gegenüber dem Aufnahmestutzen (103) zu unterbinden.

17. Fluidverbindungselement (100) nach einem der vorangehenden Ansprüche, wobei das Fluidverbindungselement (100) einen Leitungsabschnitt (105) aufweist, welcher mit dem Aufnahmestutzen (103) verbunden, insbesondere einstückig ausgebildet ist.

18. Fluidverbindungselement (100) nach Anspruch 17, wobei das Fluidverbindungselement (100) einen weiteren Leitungsabschnitt (107) aufweist, welcher mit dem Leitungsabschnitt (105) verbunden, insbesondere einstückig ausgebildet ist, wobei sich der weitere Leitungsabschnitt (107) insbesondere winklig oder gleichachsig gegenüber dem Leitungsabschnitt (105) erstreckt, und wobei der weitere Leitungsabschnitt (107) insbesondere umlaufende Vorsprünge (109) zum Aufstecken eines Fluidschlauchs aufweist.

19. Fluidverbindungsanordnung (200) zum Herstellen einer Fluidverbindung, mit:
dem Fluidverbindungselement (100) nach einem der Ansprüche 1 bis 18; und
einem Verbindungsstutzen (117), welcher in der Arretierungshülse (111) aufgenommen ist, und welcher durch das Arretierelement (113) in der Arretierungshülse (111) verriegelt ist.

## Claims

1. Fluid connection element (100) for establishing a fluid connection by means of a connecting socket (101), comprising:
a receiving socket (103) for receiving the connecting socket (101);
a locking sleeve (111), which is arranged in the receiving socket (103) in an axially displaceable manner and is configured to receive the connecting socket (101), wherein the locking sleeve (111) comprises a locking element (113), which is configured to lock the connecting socket (101) received in the locking sleeve (111);
an actuating element (125, 125-1, 125-2, 125-3), which is configured to fix the locking sleeve (111) for releasing the locking, so that the connecting socket (101) is guidable out of the locking sleeve (111); **characterized in that** the fluid connection element (100) further comprises a rotatable outer sleeve (135), which encloses the receiving socket (103) in a rotatable manner, wherein the rotatable outer sleeve comprises a releasing position, which enables the actuating of the actuating element (125, 125-1, 125-2, 125-3) for releasing the locking, and a securing position, which prevents the actuating of the actuating element (125, 125-1, 125-2, 125-3) for releasing the locking, wherein the rotatable outer sleeve (135) is rotatable between the releasing position and the securing position.

2. Fluid connection element (100) according to claim 1, wherein the actuating element (125, 125-1, 125-2, 125-3) is configured as a radially displaceable arm (125-1) of the receiving socket (103), wherein the rotatable outer sleeve (135) covers the radially displaceable arm (125-1) in the securing position in order to prevent the locking being released by the radially displaceable arm (125-1), wherein the rotatable outer sleeve (135) comprises an actuating opening (139), and wherein in the releasing position of the rotatable outer sleeve (135) the actuating opening (139) and the radially displaceable arm (125-1) are arranged in an aligned manner to each other, and wherein in the releasing position of the rotatable outer sleeve (135) the radially displaceable arm (125-1) of the receiving socket (103) is displaceable radially inwards in order to fix the locking sleeve (111) for releasing the locking.

3. Fluid connection element (100) according to claim 1, wherein the actuating element (125, 125-1, 125-2, 125-3) is configured as a radially displaceable arm (125-1) of the receiving socket (103), wherein the rotatable outer sleeve (135) covers the radially displaceable arm (125-1) in the securing position in order to prevent the locking being released by the radially displaceable arm (125-1), wherein the rotatable outer sleeve (135) comprises a further radially displaceable arm (157), which is configured to actuate the radially displaceable arm (125-1) for fixing the locking sleeve (111), wherein in the releasing position of the rotatable outer sleeve (135) the further radially displaceable arm (157) and the radially displaceable arm (125-1) are arranged in an aligned manner to each other, and wherein in the releasing position of the rotatable outer sleeve (135) the further radially displaceable arm (157) of the outer sleeve (135) is configured to radially displace the radially displaceable arm (125-1) of the receiving socket (103) inwards in order to fix the locking sleeve (111) for releasing the locking.

4. Fluid connection element (100) according to claim 1, wherein the actuating element (125, 125-1, 125-2, 125-3) is configured as a radially displaceable arm (125-2) of the rotatable outer sleeve (135), wherein in the securing position of the rotatable outer sleeve (135) the radially displaceable arm (125-2) of the outer sleeve (135) is arranged in an non-aligned manner to the locking sleeve (111), in particular to a holding web (121) of the locking sleeve (111), in order to prevent the releasing of the locking by the radially displaceable arm (125-2), and wherein in the releasing position of the rotatable outer sleeve (135) the radially displaceable arm (125-2) of the rotatable outer sleeve (135) is arranged in an aligned manner to the locking sleeve (111), in particular to the holding web (121) of the locking sleeve (111), and the radially displaceable arm (125-2) of the rotatable outer sleeve (135) is radially displaceable inwards in order to fix the locking sleeve (111) for releasing the locking.

5. Fluid connection element (100) according to claim 1, wherein the actuating element (125, 125-1, 125-2, 125-3) is configured as a sleeve projection (125-3) arranged on a sleeve inner side (161) of the rotatable outer sleeve (135), wherein the locking sleeve (111), in particular a holding web (121) of the locking sleeve (111), comprises a counter-profile (133), in particular a recess, wherein in the releasing position of the rotatable outer sleeve (135) the sleeve projection (125-3) of the rotatable outer sleeve (135) engages in the counter-profile (133), in particular the recess, in order to fix the locking sleeve (111) for releasing the locking, and wherein in the securing position of the rotatable outer sleeve (135) the sleeve projection (125-3) of the rotatable outer sleeve (135) does not engage in the counter profile (133) of the locking sleeve (111) in order to prevent the releasing of the locking.

6. Fluid connection element (100) according to claim 5, wherein the counter-profile (133) is configured as a guide groove (163) of the locking sleeve (111), in particular of the holding web (121) of the locking sleeve (111), wherein the sleeve projection (125-3) of the rotatable outer sleeve (135) is insertable into the guide groove (163) by rotating the rotatable outer sleeve (135) from the securing position to the releasing position of the outer sleeve (135).

7. Fluid connection element (100) according to claim 5 or 6, wherein the guide groove (163) comprises a groove extension direction (179), which is arranged non-orthogonally with respect to a longitudinal axis (181) of the locking sleeve (111), or which is arranged orthogonally with respect to a longitudinal axis (181) of the locking sleeve (111).

8. Fluid connection element (100) according to one of the preceding claims, wherein the receiving socket (103) comprises a socket opening (127-1), wherein the actuating element (125, 125-1, 125-2, 125-3) breaks through the socket opening (127-1) in order to fix the locking sleeve (111) for releasing the locking of the rotatable outer sleeve (135) in the releasing position.

9. Fluid connection element (100) according to one of the preceding claims, wherein the actuating element (125, 125-1, 125-2, 125-3) comprises a profile (131), in particular a projection or a recess, which in the releasing position of the outer sleeve (135) engages in a counter-profile (133), in particular a recess or a projection, of the locking sleeve (111), in particular a holding web (121) of the locking sleeve (111), in order to fix the locking sleeve (111) for releasing the locking.

10. Fluid connection element (100) according to one of the preceding claims, wherein the locking element (113) is radially outwards deformable by contact with the connecting socket (101) during an insertion of the connecting socket (101) along an insertion direction (149), in particular with a connecting socket projection (147) of the connecting socket (101), in order to enable an insertion of the connecting socket (101) into the locking sleeve (111), wherein the locking element (113) is formed in particular as a spring-elastic locking element (113), which is configured to radially snap inwards following the insertion of the connecting socket (101) into the locking sleeve (111) in order to lock the connecting socket (101) in the locking sleeve (111).

11. Fluid connection element (100) according to one of the preceding claims, wherein the receiving socket (103) comprises a further socket opening (127-2), wherein the locking element (113) comprises a stop (151), which is configured to fit on a stop edge (153) of the further socket opening (127-2) in order to limit a displacement of the axially displaceable locking sleeve (111) of the outer sleeve (135) in the securing position.

12. Fluid connection element (100) according to claim 11, wherein in the securing position of the outer sleeve (135), the locking element (113) of the axially displaceable locking sleeve (111) is radially outwards non-deformable during a guide-out of the connecting socket (101) opposite to an insertion direction (149) by fitting of the stop (151) on the stop edge (153) in order to prevent the releasing of the locking of the connecting socket (101).

13. Fluid connection element (100) according to one of the preceding claims, wherein the locking sleeve (111) fixed by the actuating element (125, 125-1, 125-2, 125-3) is axially non-displaceable, wherein the locking element (113) of the fixed locking sleeve (111) is radially outwards deformable during a guide-out of the connecting socket (101) out of the locking sleeve (111) in order to release the connecting socket (101) and to release the locking of the connecting socket (101).

14. Fluid connection element (100) according to one of the preceding claims, wherein the rotatable outer sleeve (135) has a constant outer diameter (145), or wherein the rotatable outer sleeve (135) comprises a first sleeve section (143-1) and a second sleeve section (143-2), wherein the first sleeve section (143-1) has a first outer diameter (145-1), wherein the second sleeve section (143-2) has a second outer diameter (145-2), and wherein the second outer diameter (145-2) is less than the first outer diameter (145-1).

15. Fluid connection element (100) according to one of the preceding claims, wherein at least one gripping element (141) for rotating the rotatable outer sleeve (135) is arranged at the rotatable outer sleeve (135), wherein the gripping element (141) is configured in particular as a gripping projection.

16. Fluid connection element (100) according to one of the preceding claims, wherein at least one receiving groove (117) is arranged at a socket inside (119) of the receiving socket (103), wherein the locking sleeve (111) comprises at least one longitudinal web (115), which is insertable into the respective receiving groove (117) in order to prevent a rotation of the locking sleeve (111) relative to the receiving socket (103).

17. Fluid connection element (100) according to one of the preceding claims, wherein the fluid connection element (100) comprises a line section (105), which is connected to the receiving socket (103), in particular formed in one piece.

18. Fluid connection element (100) according to claim 17, wherein the fluid connection element (100) comprises a further line section (107), which is connected to the line section (105), in particular formed in one piece, wherein the further line section (107) in particular extends angled or coaxial relative to the line section (105), and wherein the further line section (107) comprises in particular peripheral projections (109) for attaching a fluid hose.

19. Fluid connection arrangement (200) for establishing a fluid connection, comprising:
the fluid connection element (100) of one of the claims 1 to 18; and
a connecting socket (117), which is received in the locking sleeve (111), and which is locked by the locking element (113) in the locking sleeve (111).

## Revendications

1. Élément de liaison fluidique (100) destiné à établir une liaison fluidique au moyen d'un raccord de liaison (101), ledit élément de liaison fluidique comprenant :
un raccord de réception (103) destiné à recevoir le raccord de liaison (101) ;
un manchon de verrouillage (111) qui est disposé dans le raccord de réception (103) de manière à pouvoir coulisser axialement et qui est conçu pour recevoir le raccord de liaison (101), le manchon de verrouillage (111) comportant un élément de verrouillage (113) qui est conçu pour verrouiller le raccord de liaison (101) reçu dans le manchon de verrouillage (111) ; et
un élément d'actionnement (125, 125-1, 125-2, 125-3) qui est conçu pour immobiliser le manchon de verrouillage (111) afin de libérer le verrouillage de sorte que le raccord de liaison (101) puisse être guidé hors du manchon de verrouillage (111) ;
**caractérisé en ce que** l'élément de liaison fluidique (100) comporte en outre un manchon extérieur rotatif (135) qui enferme le raccord de réception (103) de manière rotative, le manchon extérieur rotatif comportant une position de libération qui permet l'actionnement de l'élément d'actionnement (125, 125-1, 125-2, 125-3) pour libérer le verrouillage et une position de sécurité qui empêche l'actionnement de l'élément d'actionnement (125, 125-1, 125-2, 125-3) pour libérer le verrouillage,
le manchon extérieur rotatif (135) pouvant tourner entre la position de libération et la position de sécurité.

2. Élément de liaison fluidique (100) selon la revendication 1, l'élément d'actionnement (125, 125-1, 125-2, 125-3) étant conçu comme un bras à déplacement radial (125-1) du raccord de réception (103), le manchon extérieur rotatif (135) recouvrant le bras à déplacement radial (125-1) dans la position de sécurité pour empêcher la libération du verrouillage par le bras à déplacement radial (125-1), le manchon extérieur rotatif (135) comportant une ouverture d'actionnement (139) et, dans la position de libération du manchon extérieur rotatif (135), l'ouverture d'actionnement (139) et le bras à déplacement radial (125-1) étant disposés en alignement l'un avec l'autre et, dans la position de libération du manchon extérieur rotatif (135), le bras à déplacement radial (125-1) du raccord de réception (103) pouvant être déplacé radialement vers l'intérieur pour immobiliser le manchon de verrouillage (111) afin de libérer le verrouillage.

3. Élément de liaison fluidique (100) selon la revendication 1, l'élément d'actionnement (125, 125-1, 125-2, 125-3) étant conçu comme un bras à déplacement radial (125-1) du raccord de réception (103), le manchon extérieur rotatif (135) recouvrant le bras à déplacement radial (125-1) dans la position de sécurité pour empêcher la libération du verrouillage par le bras à déplacement radial (125-1), le manchon extérieur rotatif (135) comportant un autre bras à déplacement radial (157) qui est conçu pour actionner le bras à déplacement radial (125-1) afin d'immobiliser le manchon de verrouillage (111), dans la position de libération du manchon extérieur rotatif (135) l'autre bras à déplacement radial (157) et le bras à déplacement radial (125-1) étant disposés en alignement l'un avec l'autre, et dans la position de libération du manchon extérieur rotatif (135) l'autre bras à déplacement radial (157) du manchon extérieur (135) étant conçu pour déplacer le bras à déplacement radial (125-1) du raccord de réception (103) radialement vers l'intérieur pour immobiliser le manchon de verrouillage (111) afin de libérer le verrouillage.

4. Élément de liaison fluidique (100) selon la revendication 1, l'élément d'actionnement (125, 125-1, 125-2, 125-3) étant conçu comme un bras à déplacement radial (125-2) du manchon extérieur rotatif (135), dans la position de sécurité du manchon extérieur rotatif (135) le bras à déplacement radial (125-2) du manchon extérieur (135) n'étant pas disposé en alignement avec le manchon de verrouillage (111), en particulier avec une nervure de fixation (121) du manchon de verrouillage (111), afin d'empêcher la libération du verrouillage par le bras à déplacement radial (125-2) et, dans la position de libération du manchon extérieur rotatif (135), le bras à déplacement radial (125-2) du manchon extérieur rotatif (135) étant disposé en alignement avec le manchon de verrouillage (111), en particulier avec la nervure de fixation (121) du manchon de verrouillage (111), et le bras à déplacement radial (125-2) du manchon extérieur rotatif (135) pouvant être déplacé radialement vers l'intérieur pour immobiliser le manchon de verrouillage (111) afin de libérer le verrouillage.

5. Élément de liaison fluidique (100) selon la revendication 1, l'élément d'actionnement (125, 125-1, 125-2, 125-3) étant conçu comme une saillie de manchon (125-3) disposée sur un côté intérieur (161) du manchon extérieur rotatif (135), le manchon de verrouillage (111), en particulier une nervure de fixation (121) du manchon de verrouillage (111), présentant un profil homologue (133), en particulier un évidement, dans la position de libération du manchon extérieur rotatif (135) la saillie (125-3) du manchon extérieur rotatif (135) s'engageant dans le profil homologue (133), en particulier l'évidement, pour immobiliser le manchon de verrouillage (111) afin de libérer le verrouillage et, dans la position de sécurité du manchon extérieur rotatif (135), la saillie (125-3) du manchon extérieur rotatif (135) ne s'engageant pas dans le profil homologue (133) du manchon de verrouillage (111) pour empêcher la libération du verrouillage.

6. Élément de liaison fluidique (100) selon la revendication 5, le profil homologue (133) étant conçu comme une rainure de guidage (163) du manchon de verrouillage (111), en particulier de la nervure de fixation (121) du manchon de verrouillage (111), la saillie (125-3) du manchon extérieur rotatif (135) pouvant être insérée dans la rainure de guidage (163) par rotation du manchon extérieur rotatif (135) de la position de sécurité à la position de libération du manchon extérieur (135).

7. Élément de liaison fluidique (100) selon la revendication 5 ou 6, la rainure de guidage (163) présentant une direction d'extension (179) qui n'est pas orthogonale à un axe longitudinal (181) du manchon de verrouillage (111) ou qui est orthogonale à un axe longitudinal (181) du manchon de verrouillage (111).

8. Élément de liaison fluidique (100) selon l'une des revendications précédentes, le raccord de réception (103) comportant une ouverture de raccord (127-1), l'élément d'actionnement (125, 125-1, 125-2, 125-3) passant par l'ouverture de manchon (127-1) pour immobiliser le manchon de verrouillage (111) dans la position de libération du manchon extérieur rotatif (135) afin de libérer le verrouillage.

9. Élément de liaison fluidique (100) selon l'une des revendications précédentes, l'élément d'actionnement (125, 125-1, 125-2, 125-3) comportant un profil (131), en particulier une saillie ou un évidement, qui s'engage, dans la position de libération du manchon extérieur (135), dans un profil homologue (133), en particulier un évidement ou une saillie, du manchon de verrouillage (111), en particulier d'une nervure de fixation (121) du manchon de verrouillage (111), pour immobiliser le manchon de verrouillage (111) afin de libérer le verrouillage.

10. Élément de liaison fluidique (100) selon l'une des revendications précédentes,
l'élément de verrouillage (113) pouvant être déformé radialement vers l'extérieur lors de l'insertion du raccord de liaison (101) le long d'une direction d'insertion (149) par contact avec le raccord de liaison (101), en particulier avec une saillie (147) du raccord de liaison (101), pour permettre l'insertion du raccord de liaison (101) dans le manchon de verrouillage (111), l'élément de verrouillage (113) étant réalisé en particulier sous la forme d'un élément de verrouillage à ressort élastique (113) qui est conçu pour s'encliqueter radialement vers l'intérieur après l'insertion du raccord de liaison (101) dans le manchon de verrouillage (111) afin de verrouiller le raccord de liaison (101) dans le manchon de verrouillage (111).

11. Élément de liaison fluidique (100) selon l'une des revendications précédentes, le raccord de réception (103) comportant une autre ouverture de manchon (127-2), l'élément de verrouillage (113) comportant une butée (151) qui est conçue pour venir en appui contre un bord de butée (153) de l'autre ouverture de raccord (127-2) afin de limiter le coulissement du manchon de verrouillage à coulissement axial (111) dans la position de sécurité du manchon extérieur (135).

12. Élément de liaison fluidique (100) selon la revendication 11, dans la position de sécurité du manchon extérieur (135), l'élément de verrouillage (113) du manchon de verrouillage à coulissement axial (111) ne pouvant être déformé radialement vers l'extérieur dans la direction opposée à une direction d'insertion (149) pendant le guidage du raccord de liaison (101) vers l'extérieur en raison du fait que la butée (151) est en appui sur le bord de butée (153) pour empêcher la libération du verrouillage du raccord de liaison (101).

13. Élément de liaison fluidique (100) selon l'une des revendications précédentes, le manchon de verrouillage (111) immobilisé par l'élément d'actionnement (125, 125-1, 125-2, 125-3) ne pouvant pas coulisser axialement, l'élément de verrouillage (113) du manchon de verrouillage immobilisé (111) pouvant être déformé radialement vers l'extérieur pendant le guidage du raccord de liaison (101) hors du manchon de verrouillage (111) afin de débloquer le raccord de liaison (101) et de libérer le verrouillage du raccord de liaison (101).

14. Élément de liaison fluidique (100) selon l'une des revendications précédentes, le manchon extérieur rotatif (135) ayant un diamètre extérieur constant (145), ou le manchon extérieur rotatif (135) comportant une première zone de manchon (143-1) et une deuxième zone de manchon (143-2), la première zone de manchon (143-1) ayant un premier diamètre extérieur (145-1), la deuxième zone de manchon (143-2) ayant un deuxième diamètre extérieur (145-2), et le deuxième diamètre extérieur (145-2) étant inférieur au premier diamètre extérieur (145-1).

15. Élément de liaison fluidique (100) selon l'une des revendications précédentes, au moins un élément de préhension (141) destiné à faire tourner le manchon extérieur rotatif (135) étant disposé sur le manchon extérieur rotatif (135), l'élément de préhension (141) étant conçu en particulier comme une saillie de préhension.

16. Élément de liaison fluidique (100) selon l'une des revendications précédentes, au moins une rainure de réception (117) étant disposée sur un côté intérieur (119) du raccord de réception (103), le manchon de verrouillage (111) comportant au moins une nervure longitudinale (115) qui peut être insérée dans la rainure de réception respective (117) afin d'empêcher la rotation du manchon de verrouillage (111) par rapport au raccord de réception (103).

17. Élément de liaison fluidique (100) selon l'une des revendications précédentes, l'élément de liaison fluidique (100) comportant une portion de conduite (105) qui est reliée au raccord de réception (103), notamment qui est conçue d'une seule pièce.

18. Élément de liaison fluidique (100) selon la revendication 17, l'élément de liaison fluidique (100) comportant une autre portion de conduite (107) qui est reliée à la portion de conduite (105), en particulier qui est conçue d'une seule pièce, l'autre portion de conduite (107) s'étendant en particulier angulairement ou coaxialement par rapport à la portion de conduite (105), et l'autre portion de conduite (107) comportant en particulier des saillies périphériques (109) destinées au placement d'un tuyau de fluide.

19. Ensemble de liaison fluidique (200) destiné à établir une liaison fluidique, ledit ensemble comprenant :
l'élément de liaison fluidique (100) selon l'une des revendications 1 à 18 ; et
un raccord de liaison (117) qui est reçu dans le manchon de verrouillage (111) et qui est verrouillé dans le manchon de verrouillage (111) par l'élément de verrouillage (113).
